(19) 

Europäisches
Patentamt
European
Patent Office
Office européen
des brevets

(11) **EP 4 317 279 A1**

(12) **EUROPEAN PATENT APPLICATION**
published in accordance with Art. 153(4) EPC

(43) Date of publication:
**07.02.2024 Bulletin 2024/06**

(21) Application number: **22781171.8**

(22) Date of filing: **30.03.2022**

(51) International Patent Classification (IPC):
*C08J 9/40* (2006.01)   *B29B 9/02* (2006.01)
*C08J 3/12* (2006.01)   *C08J 9/28* (2006.01)

(52) Cooperative Patent Classification (CPC):
**B29B 9/02; C08J 3/12; C08J 9/28; C08J 9/40**

(86) International application number:
**PCT/JP2022/016263**

(87) International publication number:
**WO 2022/210961 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021058079**

(71) Applicant: **Asahi Kasei Kabushiki Kaisha
Tokyo 1000006 (JP)**

(72) Inventors:
• **SAKAKIBARA, Yuzuru
Tokyo 100-0006 (JP)**

• **SATO, Yuka
Tokyo 100-0006 (JP)**
• **IWATA, Koji
Tokyo 100-0006 (JP)**
• **MIZOBUCHI, Kosuke
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **RESIN PELLET COMPOSITION, PRODUCTION METHOD THEREFOR, AND METHOD FOR
PRODUCING MICROPOROUS FILM**

(57)    The present invention provides: a resin pellet composition excellent in terms of low-classification property, kneadability with liquid ingredients, and transportability; a method for producing the resin pellet composition; and a method for producing a microporous polyolefin film from the resin pellet composition. The resin pellet composition comprises first pellets, which comprise a polyolefin, and 0.1-99.0 mass% liquid component. The first pellets are porous objects, some of which contain some of the liquid component infiltrated thereinto. In another embodiment, the resin pellet composition includes second pellets, which include a polyolefin. The second pellets are non-porous objects each comprising a portion made of a resin comprising the polyolefin and a portion made of a liquid component. The mass of the liquid component present on the outer surfaces of the second pellets is 20 mass% or less with respect to the total mass of the second pellets.

FIG. 1

(a)   (b)   (c)

(d)

**Description**

FIELD

The present disclosure relates to a resin pellet composition, a method of producing the same, and a method of producing a microporous film.

BACKGROUND

Polyolefin resins such as polyethylenes and polypropylenes have a good balance of molded product properties, molding processability, weather resistance, and the like; therefore, they are widely used in the production of industrial films such as packaging films and agricultural films, blow molding of bottle containers and the like, and injection molding of structural materials, large containers, and the like, as well as fiber applications such as monofilaments. In addition, polyolefin resins have recently been used in the production of microporous films serving as separators of lithium-ion batteries.

As a method of obtaining pellets of a polyolefin resin composition, the method disclosed in PTL 1, i.e. a method of heat-kneading a polymerized polyethylene powder using an extrude and subsequently pelletizing the resultant is generally employed. For example, a polyolefin resin is extrusion-molded into a strand having a diameter of 10 mm or less, generally about 1 to 5 mm, and the resulting extrusion-molded product is cut at about 2 to 5 mm in the longitudinal direction, whereby pellets can be obtained.

Meanwhile, a method of once molding a resin composition into a film or the like and subsequently re-pelletizing the resulting film or the like is also known. For example, PTL 2 discloses a method of obtaining resin pellets by compressing a portion of the resulting resin film without heating, and subsequently cutting the compressed film at a desired length.

PTL 3 also discloses resin pellets that can be obtained from a resin film and contain polyethylene as a main component. It is described that these resin pellets are in the form of being folded, separable, or laminated as a first embodiment, or in the form of planar pellets, fibers, hollow fibers, or a nonwoven fabric as a second embodiment.

[CITATION LIST]

[PATENT LITERATURE]

[PTL 1] Japanese Unexamined Patent Publication (Kokai) No. H10-101854
[PTL 2] Japanese Unexamined Patent Publication (Kokai) No. 2006-21519
[PTL 3] Japanese Unexamined Patent Publication (Kokai) No. 2019-142002
[PTL 4] Japanese Unexamined Patent Publication (Kokai) No. 2007-23171
[PTL 5] WO 2005/103127
[PTL 6] WO 2006/38532
[PTL 7] Japanese Patent Publication (Kokoku) No. H6-15721
[PTL 8] Japanese Patent No. 4623780

SUMMARY

[TECHNICAL PROBLEM]

Resin pellets are sometimes mixed with a material having a different particle size (material to be mixed), such as other resin pellets or powder, so as to impart a molded product with desired properties. Thus, these resin pellets must not be easily segregated (they must have low classification property) even when mixed with such a material to be mixed. In addition, in the production of a microporous film by a wet method, for example, resin pellets are sometimes kneaded together with a liquid component. Thus, when these resin pellets are kneaded together with the liquid component in an extruder, the liquid component is required to be more uniformly dispersed (kneadability). Further, in the production process of a molded product, resin pellets are often pneumatically transported through an air-gap line or the like. Thus, these resin pellets are required to be easily transportable without causing clogging of a pipe during pneumatic transport (transportability).

However, those conventional pellets disclosed in PTLs 1 to 3 are likely to give rise to classification when mixed with other materials having a different particle size, particularly a resin powder. Further, when the pellets disclosed in PTL 1 that have a general shape are kneaded together with a liquid component in an extruder, the liquid component may be unlikely to be uniformly dispersed, causing deterioration of the quality of the resulting film such as a microporous film. Moreover, since the pellets disclosed in PTLs 2 and 3 that have a film-like structure have a low bulk density, there is a concern that the pellets are not successfully transported by pneumatic transport, or cause clogging of a pipe. Therefore, those conventional pellets disclosed in PTLs 1 to 3 have room for improvement in terms of low classification property, kneadability with liquid components, and transportability.

An object of the present disclosure is to provide: a resin pellet composition that is excellent in transportability and kneadability with liquid components; a method of producing the same; and a method of producing a polyolefin microporous film using the resin pellet composition.

[SOLUTION TO PROBLEM]

Examples of embodiments of the present disclosure are described below.

[1] A resin pellet composition, containing:

polyolefin-containing first pellets; and
0.1 wt.% to 99.0 wt.% of a liquid component,
wherein the first pellets have porous bodies, and the porous bodies are partially impregnated with some of the liquid component.

[2] The resin pellet composition according to [1], wherein the porous bodies of the first pellets each contain a portion in the form of a microporous film; and/or a portion in the form of a bundle, knitted fabric, woven fabric, or nonwoven fabric formed of fibers or hollow fibers.

[3] The resin pellet composition according to [2], wherein the porous bodies of the first pellets each contain the portion in the form of a microporous film, the portion comprising fibrils having a thickness of 50 $\mu$m or less and a diameter of 1 $\mu$m or less, and/or
the porous bodies of the first pellets each contain the portion in the form of a bundle, knitted fabric, woven fabric, or nonwoven fabric formed of fibers or hollow fibers, the portion having a fiber diameter of 500 $\mu$m or less.

[4] The resin pellet composition according to any one of [1] to [3], wherein the amount of the liquid component contained in the first pellets is 0.1 wt.% to 50.0 wt.% based on a total weight of the resin pellet composition.

[5] The resin pellet composition according to any one of [1] to [4], wherein the liquid component is a plasticizer,

the viscosity-average molecular weight of the polyolefin contained in the first pellets, or the viscosity-average molecular weight of resins constituting the first pellets as a whole is 200,000 or more, and
the first pellets are in the form of being folded, separable, or laminated.

[6] The resin pellet composition according to any one of [1] to [5], wherein the first pellets are able to further contain, in addition to the liquid component, 5 wt.% or more of the liquid component.

[7] The resin pellet composition according to any one of [1] to [6], wherein the weight of the liquid component existing on the outer surfaces of the first pellets is 20 wt.% or less with respect to a total weight of the first pellets, and is measured by the following method:
the first pellets are collected in an amount of 20 g; the thus collected 20 g of the first pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, the weight of the first pellets is measured, and the difference in the weight before and after the wiping operation is determined as the amount of the liquid component existing on the outer surfaces of the first pellets.

[8] The resin pellet composition according to any one of [1] to [7], wherein the weight of the liquid component existing inside the first pellets is 0 wt.% to 70 wt.% with respect to a total weight of the first pellets, and is measured by the following method:
the first pellets are collected in an amount of 20 g; the thus collected 20 g of the first pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, when the liquid component is removed from the first pellets by extraction with a solvent, the difference in the weight before and after the extraction is determined as the weight of the liquid component existing inside the first pellets.

[9] A resin pellet composition, containing polyolefin-containing second pellets,

wherein the second pellets have non-porous bodies each containing a part formed of a resin containing the polyolefin, and a part formed of a liquid component, and

the weight of the liquid component existing on the outer surfaces of the second pellets is 10 wt.% or less with respect to a total weight of the second pellets, and is measured by the following method:

the second pellets are collected in an amount of 20 g; the thus collected 20 g of the second pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, the weight of the second pellets is measured, and the difference in the weight before and after the wiping operation is determined as the amount of the liquid component existing on the outer surfaces of the second pellets.

[10] The resin pellet composition according to [9], wherein the second pellets have an angle of repose of less than 60°.

[11] The resin pellet composition according to [9] or [10], wherein the weight of the liquid component existing inside the second pellets is 30 wt.% or more with respect to a total weight of the second pellets, and is measured by the following method:

the second pellets are collected in an amount of 20 g; the thus collected 20 g of the second pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, when the liquid component is removed from the first pellets by extraction with a solvent, the difference in the weight before and after the extraction is determined as the weight of the liquid component existing inside the first pellets.

[12] The resin pellet composition according to any one of [1] to [8], further containing polyolefin-containing second pellets,

wherein the second pellets have non-porous bodies each including a part formed of a resin containing the polyolefin, and a part formed of the liquid component.

[13] The resin pellet composition according to [12], wherein a weight ratio of the first pellets and the second pellets (first pellets/second pellets) is 10/90 to 90/10.

[14] The resin pellet composition according to [12] or [13], having a porosity of higher than 10% but 90% or lower after extraction of the liquid component from the first pellets.

[15] The resin pellet composition according to any one of [12] to [14], wherein the first pellets and/or the second pellets contain a polyethylene having a viscosity-average molecular weight of 200,000 or more.

[16] The resin pellet composition according to any one of [12] to [15], wherein the first pellets and/or the second pellets contain a recycled resin.

[17] The resin pellet composition according to any one of [12] to [16], wherein the amount of the liquid component contained in the second pellets is 20 wt.% to 90 wt.% based on a total weight of the resin pellet composition.

[18] The resin pellet composition according to any one of [12] to [17], wherein the first pellets and/or the second pellets have an angle of repose of less than 60°.

[19] A method of producing a polyolefin microporous film, the method including: extruding and stretching the resin pellet composition according to any one of [1] to [18]; and extracting the liquid component with a solvent to form pores.

[20] A method of producing the resin pellet composition according to any one of [12] to [18], the method including:

an extrusion step of extruding a composition, which contains a polyolefin-containing resin and a liquid component, using an extruder to form a microporous original film; and

an extraction step of extracting the liquid component from the microporous original film in the presence of an extraction solvent,

wherein the method further includes obtaining a second pellet raw material from the microporous original film after the extrusion step but before the extraction step, obtaining a first pellet raw material from the microporous original film after the extraction step, and mixing the first pellet raw material and the second pellet raw material.

[21] A method of producing the resin pellet composition according to any one of [12] to [18], the method including:

a step of producing the first pellet raw material, the step including the first extrusion step of extruding a composition, which contains a polyolefin-containing resin and a liquid component, using an extruder to form a microporous original film, the extraction step of extracting the liquid component from the microporous original film obtained in the first extrusion step in the presence of an extraction solvent, and obtaining a first pellet raw material from the microporous original film after the extraction step;
a step of producing the second pellet raw material, the step including the second extrusion step of extruding a composition, which contains a polyolefin-containing resin and a liquid component, using an extruder to form a microporous original film, and obtaining a second pellet raw material from the microporous original film obtained in the second extrusion step; and
the step of mixing the first pellet raw material and the second pellet raw material.

[ADVANTAGEIOUS EFFECTS OF INVENTION]

According to the present disclosure, a resin pellet composition that is excellent in low classification property, kneadability with liquid components, and transportability can be provided.

BRIEF DESCRIPTION OF DRAWINGS

FIG. 1(a) is a schematic perspective view of a resin pellet in which planar films are laminated; FIG. 1(b) is a schematic cross-sectional view of FIG. 1(a); FIG. 1(c) is a schematic cross-sectional view of a resin pellet in which a planar film is folded; and FIG. 1(d) is a schematic cross-sectional view of a resin pellet in which a planar film is rolled or folded.
FIG. 2(a) is a schematic perspective view of a resin pellet in which planar films are laminated and embossed, and FIG. 2(b) is a schematic cross-sectional view of FIG. 2(a).
FIGs. 3(a) and 3(b) are each a schematic drawing that illustrates one example of a resin pellet production line.
FIG. 4 provides schematic drawings that illustrate a second pellet and examples of the shape of its raw material.

DESCRIPTION OF EMBODIMENTS

**Resin Pellet Composition**

First Pellets

The resin pellet composition of the present disclosure contains: polyolefin-containing first pellets (hereinafter, also referred to as "porous pellets"); and 0.1 wt.% to 99.0 wt.% of a liquid component. The first pellets have porous bodies, which are partially impregnated with some of the liquid component. By incorporating the liquid component in the resin pellet composition in advance, the liquid component holds the materials of the resin pellet composition together, with the result that classification may not be possible. In addition, even when the resin pellet composition is mixed as required with other material having a different particle size such as a resin powder, the presence of the liquid component can inhibit the generation of dust caused by the resin powder while reducing classification. Further, since the porous bodies of the first pellets are partially impregnated with some of the liquid component, the resin is swollen with the liquid component in advance, with the result that the resin pellets and the liquid component can be more uniformly kneaded when kneaded. Moreover, even though the resin pellet composition contains the liquid component in advance, since the first pellets that are porous bodies absorb some of the liquid component, the stickiness of the resin pellet composition can be reduced. Furthermore, the first pellets are porous bodies and have a lower bulk density than a non-porous body; however, the porous bodies partially absorb some of the liquid component and are thus moderately heavy, with the result that excellent transportability is obtained. The term "porous body" used herein refers to a material having a large number of pores. A porous body has a large number of pores with a pore size of 10 nm to 100 nm, and the porosity and the puncture strength of the porous body may be about 20% to 70% and about 100 gf to 1,000 gf, respectively. The porous body may be, for example, a microporous film obtained by the method disclosed in PTL 5 or PTL 6, or a microporous film used as a separator of a lithium-ion secondary battery. The porous body may be one obtained by disposing such a microporous film in plural layers. The term "non-porous body" used herein refers to a material that is not a porous body. A non-porous body may be, for example, a material having substantially no pore, or a material that is non-porous as a whole with its pores being impregnated with other material such as a liquid component. As long as the non-porous body is a non-porous material as a whole, a part of the non-porous body may be a porous portion, for example, on its surface. A porous body and a non-porous body can be distinguished from each other based on, for example, observation under an SEM.

The first pellets are polyolefin-containing pellets that are porous bodies. The porous bodies of the first pellets are partially impregnated with some of the liquid component contained in the resin pellet composition.

The liquid component does not impregnate the entirety of the porous bodies of the first pellets, allowing the first pellets to maintain at least some of their porosity. As long as the first pellets maintain at least some of their porosity, as described below, the porous bodies may be partially crimped, adhered, or fused to form a non-porous portion.

The term "resin pellet" used herein refers to a particulate aggregate of a resin, which has dimensions appropriate for the use as a raw material in a conventional extrusion molding process. The extrusion molding process is, for example, film molding such as inflation molding, microporous film molding, hollow fiber molding, blow molding, injection molding, pipe molding, or monofilament molding.

From the standpoint of the low classification property, kneadability with liquid components, and transportability of the resin pellet composition, the amount of the first pellets in the resin pellet composition is preferably 10 wt.% to 95 wt.%, more preferably 15 wt.% to 80 wt.%, still more preferably 30 wt.% to 70 wt.%, based on a total weight of the resin pellet composition.

The amount of the liquid component contained in the first pellets is preferably more than 0.1 wt.% but 50.0 wt.% or less, more preferably 0.1 wt.% to 30 wt.%, still more preferably 0.5 wt.% to 10 wt.%, yet still more preferably 0.5 wt.% to 10 wt.%, further preferably 0.5 wt.% to 5 wt.%, particularly preferably 1.0 wt.% to 5 wt.%, based on a total weight of the resin pellet composition. When the amount of the liquid component contained in the first pellets is in any of these ranges, the low classification property, kneadability with liquid components, and transportability of the resin pellet composition tend to be further improved.

Some of the liquid component contained in the first pellets may exist on the outer surfaces of the first pellets. When the resin pellet composition further contains second pellets, some or all of the liquid component contained in the first pellets may exist on the outer surfaces of the first pellets. An upper limit of the weight of the liquid component existing on the outer surfaces of the first pellets is preferably 20 wt.% or less, more preferably 10 wt.% or less, still more preferably 5 wt.% or less, particularly preferably 2 wt.% or less, with respect to a total weight of the first pellets. A lower limit value that can be combined with any of these upper limit values is not particularly limited, and may be preferably 0 wt.% or more, more than 0 wt.%, 0.1 wt.% or more, 0.2 wt.% or more, or 1 wt.% or more. When the amount of the liquid component existing on the outer surfaces of the first pellets is in any of these ranges, not only are the kneadability with liquid components and transportability of the resin pellet composition further improved, but also bridge formation inside a hopper of an extruder is improved, with the result that fluctuations in extrusion can be further reduced.

The weight of the liquid component existing on the outer surfaces of the first pellets is measured by the following method. First, the first pellets are collected in an amount of 20 g. The liquid component existing on the outer surfaces of the first pellets is wiped off with a 1-m square sheet having a thickness of 0.6 mm in which plural 6 $\mu$m-thick polyethylene microporous films having a porosity of 38%, a puncture strength of 280 gf, and a pore size of 0.06 $\mu$m are stacked. When the liquid component is transferred to the sheet, the part thereof changes in color to translucent. This wiping operation is repeated multiple times while replacing the sheet until the liquid component no longer infiltrates into the sheet, i.e. a change in the color of the sheet is no longer observable. Thereafter, the weight of the first pellets is measured, and the difference in the weight before and after the wiping operation is determined as the amount of the liquid component existing on the outer surfaces of the first pellets. A more detailed measurement method will be described below in the Examples section.

Some of the liquid component contained in the first pellets may exist inside the first pellets. A lower limit of the weight of the liquid component existing inside the first pellets may be preferably 0 wt.% or more, more than 0 wt.%, 0.1 wt.% or more, 0.5 wt.% or more, 1 wt.% or more, 2 wt.% or more, 5 wt.% or more, 10 wt.% or more, 20 wt.% or more, or 50 wt.% or more, with respect to a total weight of the first pellets. An upper limit value that can be combined with any of these lower limit values is not particularly limited, and may be preferably 70 wt.% or less, 65 wt.% or less, 50 wt.% or less, 40 wt.% or less, 30 wt.% or less, 25 wt.% or less, 20 wt.% or less, 10 wt.% or less, or 5 wt.% or less. When the amount of the liquid component existing inside the first pellets is in any of these ranges, the kneadability with liquid components and transportability of the resin pellet composition are further improved, with the result that fluctuations in extrusion can be further reduced. For example, in the production of a microporous film used as a separator of a lithium-ion secondary battery, the weight of the liquid component existing inside the first pellets is preferably 0 wt.% to 5 wt.%.

The weight of the liquid component existing inside the first pellets is measured by the following method. First, the first pellets are collected in an amount of 20 g. The liquid component existing on the outer surfaces of the first pellets is wiped off with a 1-m square sheet having a thickness of 0.6 mm in which plural 6 $\mu$m-thick polyethylene microporous films having a porosity of 38%, a puncture strength of 280 gf, and a pore size of 0.06 $\mu$m are stacked. When the liquid component is transferred to the sheet, the part thereof changes in color to translucent. This wiping operation is repeated multiple times while replacing the sheet until the liquid component no longer infiltrates into the sheet, i.e. a change in the color of the sheet is no longer observable. Thereafter, when the liquid component is removed from the first pellets by extraction with a solvent, the difference in the weight before and after the extraction is determined as the weight of the liquid component existing inside the first pellets. A more detailed measurement method will be described below in the Examples section.

An upper limit value of the angle of repose of the first pellets is preferably less than 60°, more preferably less than 50°, and still more preferably less than 45°. A lower limit value that can be combined with any of these upper limit values is not particularly limited, and may be preferably 20° or more, 15° or more, or 10° or more. When the angle of repose of the first pellets is in any of these ranges, not only are the kneadability with liquid components and transportability of the resin pellet composition further improved, but also classification that occurs during dry-blending of the pellet composition of the present invention with other general pellets such as polypropylene pellets is inhibited, with the result that fluctuations in extrusion can be further reduced.

The porosity of the first pellets after extraction of the liquid component is preferably 5% to 95%, more preferably 10% to 80%, still more preferably 20% to 60%, yet still more preferably 30% to 50%. When the porosity of the first pellets after extraction of the liquid component is in any of these ranges, the low classification property, kneadability with liquid components, and transportability of the resin pellet composition tend to be further improved.

With regard to the dimensions of the first pellets, from the standpoint of inhibiting clogging of an air-gap line and the like during pneumatic transport to facilitate the transport, the maximum length of the first pellets is preferably 10 mm or less and, from the standpoint of further improving the transportability in an extruder, the maximum length of the first pellets is more preferably 6 mm or less, still more preferably 5 mm or less. A lower limit of the maximum length is preferably not less than 1 mm, more preferably not less than 2 mm. The maximum length of the first pellets is preferably 1 mm or more since this allows the resin pellet composition to be transported in a favorable manner, particularly in a large-sized extruder having a large clearance between a screw and a cylinder. It is noted here that the "maximum length" of a pellet refers to, for example, the maximum diameter in the case of an oval spherical pellet, the maximum diagonal length in the case of a rectangular parallelepiped pellet, or the length in the case of a fibrous pellet. In accordance with this, the maximum projection length is used for other shapes as well.

The first pellets are preferably resin pellets containing a polyolefin as a main component. The term "main component" used herein means that the component of interest is contained at a ratio of higher than 50 wt.% based on a total weight of all resin components of the first pellets. Examples of the polyolefin include polyethylenes and polypropylenes, and the polyolefin is preferably a polyethylene.

The main component of the first pellets is preferably a melt-kneaded polyethylene. It is known in the art that the strength of a polymer molded product varies depending on the number of entanglements between tie molecules. While not wishing to be bound by any theory, it is believed that melt-kneading reduces the polymer crystallite size and increases the number of entanglements between tie molecules, as a result of which the strength of the resulting resin pellets as well as that of a molded product obtained from the resin pellets are improved. Melt-kneading of the polyethylene can be performed using a melter and/or a kneader, or a general twin-screw or single-screw extruder.

In addition to the polyethylene, the first pellets may contain a polypropylene or other polyolefin resin for improvement of heat resistance. Further, in addition to the polyolefin, the first pellets may also contain other resins, for example, polyethylene terephthalate (PET) and a non-polyolefin resin such as nylon, within a range that does not impair the performance of the resin pellet composition of the present disclosure. When the first pellets are a mixture of a polyethylene and a resin other than the polyethylene, the ratio of the resin other than the polyethylene in the pellets is preferably less than 30 wt.% from the standpoint of dispersibility and/or retention of strength, and it is more preferably less than 20 wt.%, still more preferably less than 10 wt.%, from the standpoint of dispersibility. A lower limit thereof is not particularly limited and may be, for example, 0 wt.% or more, or more than 0 wt.%.

The polyolefin contained in the first pellets (porous pellets) or the resins constituting the first pellets as a whole have a viscosity-average molecular weight (Mv) of preferably 200,000 or more, more preferably 300,000 or more, still more preferably 500,000 or more. With the Mv of the polyethylene contained in the first pellets or the resins constituting the first pellets as a whole being 200,000 or more, when the resin pellets are mixed with a resin containing a low-molecular-weight component having an Mv of less than 200,000 as a main component, a molded product or film of the resulting mixture exhibits a markedly improved mechanical strength in terms of, for example, tear strength and tensile strength, which is advantageous particularly for those applications where mechanical strength of a microporous film or the like is required. An upper limit of this Mv is not particularly limited and may be, for example, 5,000,000 or less, preferably 3,000,000 or less, still more preferably 2,000,000 or less.

From the standpoint of the tensile strength of the molded product, the Mv of the polyethylene contained in the first pellets is preferably more than 200,000, more preferably 300,000 or more (or more than 300,000), still more preferably 500,000 or more (or more than 500,000). From the same standpoint, the Mv of the first pellets is preferably 300,000 or more, more preferably 500,000 or more. An upper limit of this Mv is not particularly limited and may be, for example, 5,000,000 or less, preferably 3,000,000 or less, still more preferably 2,000,000 or less.

The polyethylene contained in the first pellets may be, for example, a mixture that contains plural components having different molecular weights from each other. For example, a mixture of a polyethylene having an Mv of 100,000 and a polyethylene having an Mv of 700,000 may have an Mv of 200,000 or more as a whole.

From the standpoint of productivity, environmental concerns, and the like, the first pellets are preferably formed of a recycled resin. The term "recycled resin" used herein means a material that is pelletized from a resin molded material obtained from, for example, a product such as a film, a blow-molded container, or an injection molded article, or an intermediate of such a product or a nonconforming product, through at least one round of the melting, kneading, and extrusion steps. For example, as described below, a raw material of the first pellets is more preferably formed from a polyolefin microporous original film obtained after the extraction step. Also when the first pellets are formed of a recycled resin, from the standpoint of the strength of a molded article obtained from the resin pellets, the viscosity-average molecular weight (Mv) of the polyethylene is preferably 200,000 or more (or more than 200,000), more preferably 300,000 or more (or more than 300,000), still more preferably 500,000 or more (or more than 500,000). An upper limit of this Mv is not particularly limited and may be, for example, 1,000,000 or less.

Examples of the polyethylene include high-density polyethylenes (HDPE), ultrahigh-molecular-weight polyethylenes (UHMWPE), linear low-density polyethylenes (LLDPE), highpressure low-density polyethylenes, and mixtures thereof. Further, a polyethylene which is obtained utilizing a metallocene catalyst and has a narrow molecular weight distribution, or an HDPE obtained by multistage polymerization may be used. The term "ultrahigh-molecular-weight polyethylene (UHMWPE)" used herein refers to a polyethylene having a viscosity-average molecular weight (Mv) of 350,000 or more.

When the first pellets contain a polyethylene, the ratio of the polyethylene is preferably 50 wt.% to 100 wt.%, more preferably 70 wt.% to 100 wt.%, still more preferably 80 wt.% to 100 wt.%, based on a total weight of the resin components of the first pellets. When the first pellets contain a UHMWPE, the ratio of the UHMWPE is preferably 5 wt.% to 50 wt.% from the standpoint of the optical properties, strength, and foreign matter removability of a molded product, or preferably 9 wt.% to 40 wt.% from the standpoint of the dispersibility, based on a total weight of the resin components of the first pellets.

The first pellets are preferably planar, folded (in a folded form), separable (in a separable form), or laminated (in a laminated form). When the first pellets have at least one of these forms, resin pellets that exhibit excellent strength and optical properties and has excellent removability of foreign matter such as fisheyes and unmelted gels at the time of film formation are obtained. The reason for this is because the pellets efficiently convey a shear force in an extruder and can be kneaded such that the molecular chains of the polyethylene contained in the pellets are uniformly stretched, and foreign matter such as fisheyes and unmelted gels can thereby be reduced. The first pellets are more preferably in a folded form, a separable form, or a laminated form. The reason for this is because, in addition to the above-described reduction in foreign matter, such first pellets are more likely to retain the liquid component, with the result that a resin pellet composition that is superior in transportability, low classification property, and kneadability with liquid components can be obtained.

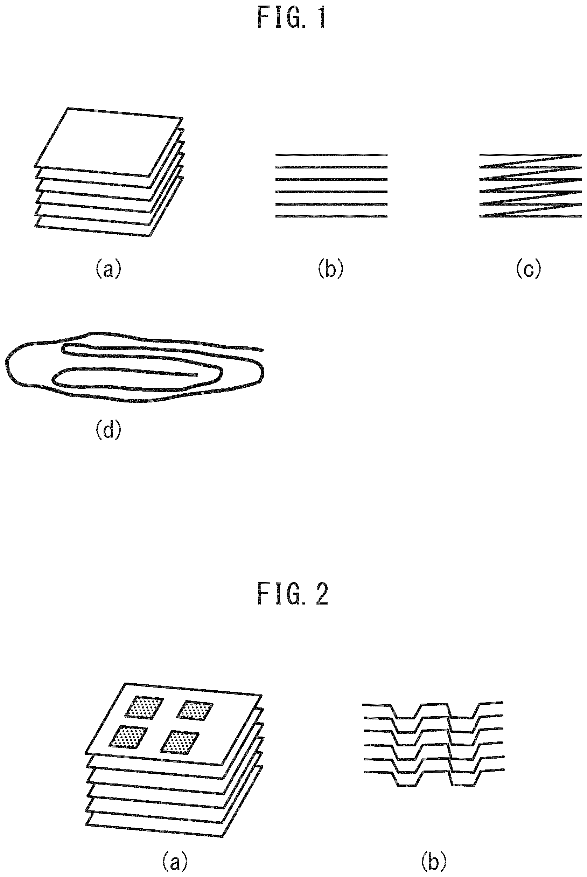

FIG 1(a) is a schematic perspective view that illustrates a resin pellet having a form in which planar films are laminated. A cross-section of the resin pellet in this laminated form may have, for example, individual planes (FIG. 1(b)). At a cross-section of a resin pellet in a folded form, for example, one ends of plural planar portions may be bonded with each other (FIG. 1(c)). Further, as illustrated in FIG. 1(d), a resin pellet may have such a cross-sectional shape in which a planar microporous film is rolled or folded. FIGs. 1(a) to (d) are schematic drawings; therefore, the resin pellets of the present disclosure are not limited to having any of these regular laminated forms illustrated in FIGs. 1(a) to (d).

The resin pellets in a separable form may be connected with each other to such an extent that at least some of the pellets maintain a pellet shape during pneumatic transport (without impairing the transportability) and can be separated when a force is applied thereto by hand. Specifically, the resin pellets in a separable form may have a non-bonded portion and, more particularly a non-press-bonded portion, a non-adhered portion, or a non-fused portion. For example, resin pellets having both a bonded portion and a non-bonded portion (FIG. 2(b)) can be obtained by embossing pellets having a folded form or a laminated form as illustrated in FIG. 2(a). FIGs. 2(a) and (b) are schematic drawings; therefore, the resin pellets of the present disclosure are not limited to having the regular laminated form and the embossed parts that are illustrated in FIGs. 2(a) and (b).

The porous bodies of the first pellets preferably each contain a portion in the form of a microporous film, a portion in the form of a bundle, knitted fabric, woven fabric, or nonwoven fabric formed of fibers or hollow fibers, or a combination thereof. When the porous bodies contain at least one of these portions, the porous bodies are likely to partially absorb the liquid component; therefore, a resin pellet composition that is superior in transportability, low classification property, and kneadability with liquid components can be obtained.

When the porous bodies of the first pellets have a part in the form of a microporous film, this part in the form of a single microporous film has a thickness of preferably 500 μm or less, more preferably 100 μm or less, still more preferably 50 μm or less, yet still more preferably 30 μm or less, particularly preferably 20 μm or less. The part in the form of a microporous film preferably contains fibrils having a diameter of 10 μm or less, more preferably 5 μm or less, still more preferably 1 μm or less. When the porous bodies of the first pellets have a part in the form of a bundle, knitted fabric, woven fabric, or nonwoven fabric formed of fibers or hollow fibers, the fibers have a diameter of preferably 500 μm or less, more preferably 100 μm or less, still more preferably 50 μm or less, yet still more preferably 30 μm or less, particularly preferably 20 μm or less. With the first pellets having such a part, the molecular chains of the polyolefin contained in the pellets are uniformly stretched, with the result that strength and foreign matter removability can be ensured at the time of forming a microporous film from the pellets and other material. By controlling the film thickness or the fiber diameter to be 100 $\mu$m or less, the amount of extrusion does not have to be reduced in order to reduce the amount of unmelted gels. With the film thickness or the fiber diameter being 50 $\mu$m or less, since the resin is already dispersed to a level of 50 $\mu$m or less, little or no unmelted gel is visually observed even when the first pellets contain a high-molecular-weight component. This is believed to be because, since the first pellets have smaller dimensions than a general polyethylene powder and the crystalline region of polyethylene is stretched to a level of 50 $\mu$m, favorable dispersion is attained even when the first pellets are melt-kneaded with an LLDPE. The dispersion is improved as the film thickness or the fiber diameter decreases. A lower limit of the film thickness or the fiber diameter is not limited; however, from the standpoint of the ease of handling, it is preferably not less than 1 $\mu$m, not less than 3 $\mu$m, or not less than 4 $\mu$m.

It is particularly preferred that the first pellets have a thin film structure having the above-described film thickness, in which the polyethylene contained therein or the resins constituting the first pellets as a whole have a viscosity-average molecular weight (Mv) of 200,000 or more. The technical background and significance of this feature will now be explained. In recent years, molded products such as microporous membranes and films have been reduced in thickness from the standpoint of the economy and the like of raw materials to be used; however, in association with such reduction in thickness, it is necessary to prevent a reduction in mechanical strength. For improvement of the film strength, technologies using a high-molecular-weight component as a resin raw material have been proposed. For example, PTL 4 discloses a polyethylene resin composition having an extremely high molecular weight. However, this polyethylene resin composition by itself has an overly high viscosity, and thus cannot be made into a film by general extrusion molding, such as an inflation method, since it requires an excessively high resin pressure or load current of a molding machine. Accordingly, a method of mixing such a polyethylene resin composition having an extremely high molecular weight in the form of a resin powder with resin pellets of a conventional linear low-density polyethylene (LLDPE) or low-density polyethylene (LDPE) and subsequently kneading the resulting mixture in an extruder may be employed. However, phenomena that the strength of the resulting film is not increased due to insufficient kneading and that a high-molecular-weight component remains as so-called fisheyes or unmelted gels in the film, which phenomena are presumably caused by defective dispersion of the high-molecular-weight component, are likely to occur. These phenomena are likely to occur prominently with the use of a high-molecular-weight polyolefin composition, such as a polyolefin composition having a viscosity-average molecular weight of generally more than about 200,000. The cause of this is presumed to be that, although a low-molecular-weight component is softened first in an extruder, a sufficient shear stress required for dispersion is not transmitted to a high-molecular-weight component that is slow to soften. In other words, it is presumed that, since such a high-molecular-weight component has extremely long molecular chains, the energy that can be applied thereto for disintegration of crystals inside a general extruder is insufficient, and this causes the molecular chains to remain in a non-disintegrated state. Further, the fact that a powder of such a high-molecular-weight component generally has a high viscosity and kneading thereof thus takes time is also believed to be a cause of defective dispersion in an extruder. On the other hand, in a preferred embodiment of the present disclosure, the use of the first pellets having a shape of a thin film or the like enables to efficiently melt the resin component in an extruder and thereby sufficiently disintegrating the molecular chains with application of a shear stress. Defective dispersion may not occur even when the viscosity-average molecular weight (Mv) is set at 200,000 or more. Therefore, the mechanical strength of a molded product can be improved without reducing the amount of a conventional high-molecular-weight resin powder to be mixed, or mixing such a resin powder. Consequently, defective dispersion and classification of materials caused by the conventional high-molecular-weight resin powder can be reduced or avoided.

The first pellets can, in addition to the liquid component already contained therein, further contain the liquid component in an amount of preferably 5 wt.% or more, more preferably 10 wt.% or more, particularly preferably 20 wt.% or more. This means that the first pellets have a property of being able to further absorb the liquid component in addition to the liquid component already contained therein, and this property can be evaluated based on, for example, the change in weight before and after exposure of the first pellets to an excess amount of the liquid component. A measurement method thereof will be described below in the Examples section. An upper limit of the amount of the liquid component that the first pellets can further contain is not particularly limited, and it may be, for example, 65 wt.% or less, preferably 60 wt.% or less, more preferably 50 wt.% or less. When the first pellets are in a state of being able to further contain the liquid component in the above-described range, the stickiness of the first pellets can be further reduced, with the result that the transportability and the extrudability are further improved.

The first pellets preferably have a bulk density of 0.1 g/cm³ to 0.4 g/cm³ as measured in accordance with the standard SAP01-79 prescribed by The Association of Powder Process Industry and Engineering, Japan, after extraction of the liquid component therefrom. When the bulk density is in this range, a resin pellet composition that exhibits excellent strength and optical properties and has excellent removability of foreign matter such as fisheyes and unmelted gels at the time of film formation can be obtained. From the standpoint of further improving the strength, optical properties, or foreign matter removability of a film obtained using the first pellets, the bulk density of the first pellets is preferably lower than 0.35 g/cm$^3$, more preferably 0.30 g/cm$^3$ or lower, still more preferably lower than 0.28 g/cm$^3$.

Second Pellets

It is preferred that the resin pellet composition further contain polyolefin-containing second pellets (hereinafter, also referred to as "non-porous pellets"), and that the second pellets be non-porous bodies each having a part formed of a polyolefin-containing resin and a part formed of a liquid component. As long as the non-porous bodies are each a non-porous material as a whole, the non-porous bodies may have a porous portion partially, for example, on their surfaces. The non-porous bodies may be, for example, a mixture which is obtained by generally melt-kneading the resin and the liquid component, and from which the liquid component has not been removed by extraction. By incorporating the second pellets having a part formed of the liquid component into the resin pellet composition in addition to the first pellets, the amount of the liquid component contained in the whole resin pellet composition can be further increased. Accordingly, the time required for swelling the resin pellet composition with the liquid component at the time of extrusion can be greatly shortened, and the kneadability with liquid components is thus further improved. As a result, excellent removability of fisheyes, unmelted gels, and the like is obtained. In addition, even when the amount of the liquid component contained in the whole resin pellet composition is increased, since the first pellets that are porous bodies absorb some of the liquid component, the stickiness of the resin pellet composition can be reduced. Moreover, the second pellets can, by being non-porous bodies, further increase the bulk density of the resin pellet composition as a whole, with the result that the transportability is further improved. The second pellets are preferably a melt-kneaded product of the polyolefin-containing resin and the liquid component, and the second pellets may be made into porous bodies when the liquid component is extracted therefrom.

From the standpoint of the low classification property, kneadability with liquid components, and transportability of the resin pellet composition, the amount of the second pellets in the resin pellet composition is preferably 10 wt.% to 90 wt.% based on a total weight of the resin pellet composition. From the standpoint of the low classification property, kneadability with liquid components, and transportability of the resin pellet composition, a weight ratio of the first pellets and the second pellets (first pellets/second pellets) is preferably 10/90 to 90/10, more preferably 20 to 80, still more preferably 30 to 60.

The amount of the liquid component contained in the second pellets is preferably 10 wt.% to 90 wt.% or less, more preferably 20 wt.% to 90 wt.%, still more preferably 30 wt.% to 80 wt.%, yet still more preferably 40 wt.% to 70 wt.%, based on a total weight of the resin pellet composition. When the amount of the liquid component contained in the second pellets is in any of these ranges, the low classification property, kneadability with liquid components, and transportability of the resin pellet composition tend to be further improved.

Some of the liquid component contained in the second pellets may exist on the outer surfaces of the second pellets. An upper limit of the weight of the liquid component existing on the outer surfaces of the second pellets is preferably 10 wt.% or less, 5 wt.% or less, 3 wt.% or less, 1 wt.% or less, with respect to a total weight of the second pellets. A lower limit value that can be combined with any of these upper limit values is not particularly limited, and may be preferably 0 wt.% or more, more than 0 wt.%, 0.1 wt.% or more, 0.3 wt.% or more, or 0.5 wt.% or more. When the amount of the liquid component existing on the outer surfaces of the second pellets is in any of these ranges, not only are the kneadability with liquid components and transportability of the resin pellet composition further improved, but also the pellets are not adhered with each other, with the result that fluctuations in extrusion can be further reduced.

The weight of the liquid component existing on the outer surfaces of the second pellets is measured in accordance with the above-described method of measuring the weight of the liquid component existing on the outer surfaces of the first pellets. A more detailed measurement method will be described below in the Examples section.

Some or all of the liquid component contained in the second pellets may exist inside the second pellets. A lower limit of the weight of the liquid component existing inside the second pellets may be preferably 10 wt.% or more, 20 wt.% or more, 30 wt.% or more, 40 wt.% or more, or 50 wt.% or more, with respect to a total weight of the second pellets. An upper limit value that can be combined with any of these lower limit values is not particularly limited, and may be preferably 70 wt.% or less, 65 wt.% or less, or 60 wt.% or less. When the amount of the liquid component existing inside the second pellets is in any of these ranges, the kneadability with liquid components and transportability of the resin pellet composition are further improved, with the result that fluctuations in extrusion can be further reduced. In addition, bleeding does not occur after storage.

The weight of the liquid component existing inside the second pellets is measured in accordance with the above-described method of measuring the weight of the liquid component existing inside the first pellets. A more detailed measurement method will be described below in the Examples section.

An upper limit value of the angle of repose of the second pellets is preferably less than 60°, more preferably less than 50°, still more preferably less than 45°. A lower limit value that can be combined with any of these upper limit values is not particularly limited, and may be preferably 10° or more, 15° or more, or 20° or more. When the angle of repose of the second pellets is in any of these ranges, the kneadability with liquid components and transportability of the resin pellet composition are further improved, with the result that fluctuations in extrusion can be further reduced.

When the second pellets are porous bodies as a result of extracting the liquid component therefrom, the porosity of the second pellets after the extraction of the liquid component is preferably 10% or more but 90% or less, more preferably 20% to 80%, still more preferably 30% to 70%, yet still more preferably 40% to 60%. When the porosity of the second pellets after the extraction of the liquid component is in any of these ranges, the low classification property, kneadability with liquid components, and transportability of the resin pellet composition tend to be further improved.

With regard to the dimensions of the second pellets, from the standpoint of inhibiting clogging of an air-gap line and the like during pneumatic transport to facilitate the transport, the maximum length of the second pellets is preferably 10 mm or less and, from the standpoint of further improving the transportability in an extruder, the maximum length of the second pellets is more preferably 6 mm or less, still more preferably 5 mm or less. A lower limit of the maximum length is preferably not less than 1 mm, more preferably not less than 2 mm. The maximum length of the second pellets is preferably 1 mm or more since this allows the resin pellet composition to be transported in a favorable manner, particularly in a large-sized extruder having a large clearance between a screw and a cylinder.

The second pellets are preferably resin pellets containing a polyolefin as a main component. The term "main component" used herein means that the component of interest is contained at a ratio of higher than 50 wt.% based on a total weight of all resin components of the second pellets. Examples of the polyolefin include polyethylenes and polypropylenes, and the polyolefin is preferably a polyethylene.

The main component of the second pellets is preferably a melt-kneaded polyethylene. It is known in the art that the strength of a polymer molded product varies depending on the number of entanglements between tie molecules. While not wishing to be bound by any theory, it is believed that melt-kneading reduces the polymer crystallite size and increases the number of entanglements between tie molecules, as a result of which the strength of the resulting resin pellets as well as that of a molded product obtained from the resin pellets are improved. Melt-kneading of the polyethylene can be performed using a melter and/or a kneader.

In addition to the polyethylene, the second pellets may contain a polypropylene or other polyolefin resin for improvement of heat resistance. Further, in addition to the polyolefin, the second pellets may also contain other resins, for example, polyethylene terephthalate (PET) and a non-polyolefin resin such as nylon, within a range that does not impair the performance of the resin pellet composition of the present disclosure. When the second pellets are a mixture of a polyethylene and a resin other than the polyethylene, the ratio of the resin other than the polyethylene in the pellets is preferably less than 30 wt.% from the standpoint of dispersibility and/or retention of strength, and it is more preferably less than 20 wt.%, still more preferably less than 10 wt.%, from the standpoint of dispersibility. A lower limit thereof is not particularly limited and may be, for example, 0 wt.% or more, or more than 1 wt.%.

The polyethylene contained in the second pellets or the resins constituting the second pellets as a whole have a viscosity-average molecular weight (Mv) of preferably 200,000 or more. With the Mv of the polyethylene contained in the second pellets or the resins constituting the second pellets as a whole being 200,000 or more, when the resin pellets are mixed with a resin containing a low-molecular-weight component having an Mv of less than 200,000 as a main component, a molded product or film of the resulting mixture exhibits a markedly improved mechanical strength in terms of, for example, tear strength and tensile strength. An upper limit of this Mv is not particularly limited and may be, for example, 5,000,000 or less, preferably 3,000,000 or less, still more preferably 2,000,000 or less.

From the standpoint of the tensile strength of the molded product, the Mv of the polyethylene contained in the second pellets is preferably more than 200,000, more preferably 300,000 or more (or more than 300,000), still more preferably 500,000 or more (or more than 500,000). From the same standpoint, the Mv of the second pellets is preferably 300,000 or more, more preferably 500,000 or more. An upper limit of this Mv is not particularly limited and may be, for example, 5,000,000 or less, preferably 3,000,000 or less, still more preferably 2,000,000 or less.

The polyethylene contained in the second pellets may be, for example, a mixture that contains plural components having different molecular weights from each other. For example, a mixture of a polyethylene having an Mv of 100,000 and a polyethylene having an Mv of 700,000 may have an Mv of 200,000 or more as a whole.

The second pellets can, in addition to the liquid component already contained therein, further contain the liquid component in an amount of preferably less than 5 wt.%, more preferably 2 wt.% or less, particularly preferably 1 wt.% or less. This means that the second pellets may not absorb the liquid component in addition to the liquid component already contained therein, and this property can be evaluated based on, for example, the change in weight before and after exposure of the second pellets to an excess amount of the liquid component is small. A measurement method thereof will be described below in the Examples section.

From the standpoint of productivity, environmental concerns, and the like, the second pellets are preferably formed of a recycled resin, and more preferably formed from, for example, a microporous original film obtained before the extraction step as a raw material of the second pellets as described below. Also when the second pellets are formed of a recycled resin, from the standpoint of the strength of a molded product obtained from the resin pellets, the viscosity-average molecular weight (Mv) of the polyethylene is preferably 200,000 or more (or more than 200,000), more preferably 300,000 or more (or more than 300,000), still more preferably 500,000 or more (or more than 500,000). An upper limit of this Mv is not particularly limited and may be, for example, 5,000,000 or less, preferably 3,000,000 or less, still more preferably 2,000,000 or less.

Examples of the polyethylene include high-density polyethylenes (HDPE), ultrahigh-molecular-weight polyethylenes (UHMWPE), linear low-density polyethylenes (LLDPE), highpressure low-density polyethylenes, and mixtures thereof. Further, a polyethylene which is obtained utilizing a metallocene catalyst and has a narrow molecular weight distribution, or an HDPE obtained by multistage polymerization may be used. The term "ultrahigh-molecular-weight polyethylene (UHMWPE)" used herein refers to a polyethylene having a viscosity-average molecular weight (Mv) of 350,000 or more.

When the second pellets contain a polyethylene, the ratio of the polyethylene is preferably 50 wt.% to 100 wt.%, more preferably 70 wt.% to 100 wt.%, still more preferably 80 wt.% to 100 wt.%, based on a total weight of the resin components of the second pellets. When the second pellets contain a UHMWPE, the ratio of the UHMWPE is preferably 5 wt.% to 50 wt.% from the standpoint of the optical properties, strength, and foreign matter removability of a molded product, or preferably 9 wt.% to 40 wt.% from the standpoint of the dispersibility, based on a total weight of the resin components of the second pellets.

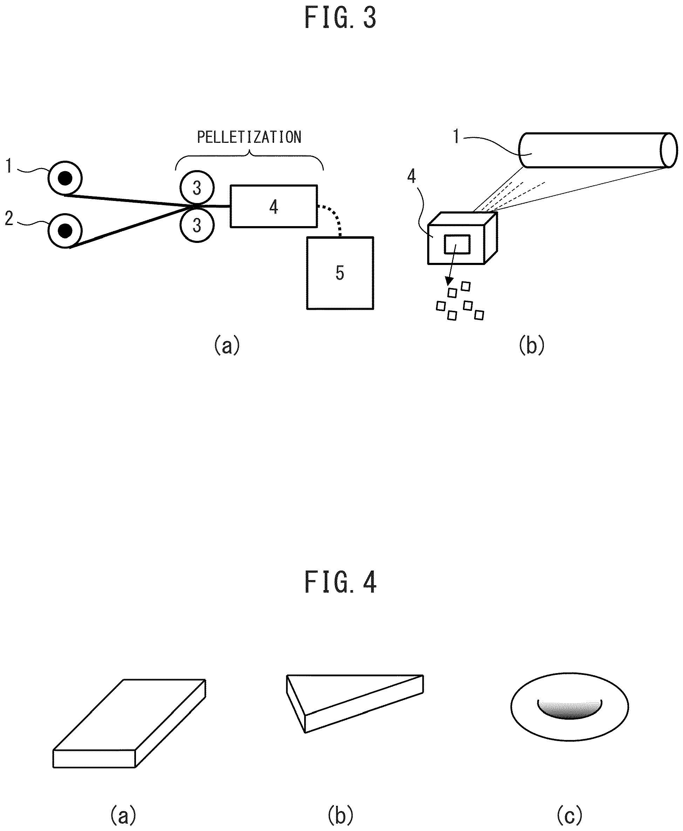

The second pellets may have, for example, an oval spherical shape, a button shape, a polygonal shape (FIG. 4(a) or (b)), or an oblate spheroid shape (FIG. 4(c)). The second pellets may be planar, folded (in a folded form), separable (in a separable form), or laminated (in a laminated form). The second pellets may be preferably fragments obtained by cutting a sheet containing the liquid component into pieces having a polygonal shape with a maximum length of about 5 mm. The sheet containing the liquid component can be a melt-kneaded product of the polyolefin-containing resin and the liquid component. Examples of the polygonal shape include the rectangular shape schematically illustrated in FIG. 4(a) and a triangular shape schematically illustrated in FIG. 4(b). The fragments preferably have a thickness of about 0.5 mm to 3 mm. When the second pellets have any one of the above-described forms, resin pellets that exhibit excellent strength and optical properties and have excellent removability of foreign matter such as fisheyes and unmelted gels at the time of film formation are obtained. The reason for this is because the pellets efficiently convey a shear force in an extruder and can be kneaded such that the molecular chains of the polyethylene contained in the pellets are uniformly stretched, and foreign matter such as fisheyes and unmelted gels can thereby be reduced. The second pellets are more preferably in a folded form, a separable form, or a laminated form. The reason for this is because, in addition to the above-described reduction in foreign matter, such second pellets are more likely to retain the liquid component, with the result that a resin pellet composition that is superior in transportability, low classification property, and kneadability with liquid components can be obtained.

The description relating to FIGs. 1(a) to (d) in the section "First Pellets" applies to the second pellets as well. Further, the description relating to FIGs. 2(a) and (b) in the section "First Pellets" also applies to the second pellets.

The second pellets preferably have a bulk density of 0.1 to 0.9 g/cm$^3$ as measured in accordance with the standard SAP01-79 prescribed by The Association of Powder Process Industry and Engineering, Japan, after extraction of the liquid component therefrom. When the bulk density is in this range, a resin pellet composition that exhibits excellent strength and optical properties and has excellent removability of foreign matter such as fisheyes and unmelted gels at the time of film formation can be obtained. From the standpoint of further improving the strength, optical properties, or foreign matter removability of a film obtained using the second pellets, the bulk density of the second pellets is preferably 0.2 to 0.8 g/cm$^3$, more preferably 0.30 to 0.6 g/cm$^3$, still more preferably 0.4 to 0.55 g/cm$^3$.

Liquid Component

The resin pellet composition of the present disclosure contains 0.1 wt.% to 99.0 wt.% of a liquid component based on a total weight of the resin pellet composition. From the standpoint of classification property, kneadability with liquid components, and transportability, the amount of the liquid component is preferably 5 wt.% to 80 wt.%, 10 wt.% to 60 wt.%, or 20 wt.% to 50 wt.%. It is noted here that the amount of the liquid component means the weight of the liquid component contained in the whole resin pellet composition, including the liquid component contained in both the first pellets and the second pellets.

The term "liquid component" used herein means a material having a fluidity at a temperature of 10°C to 100°C, preferably at a normal temperature of about 25°C. Examples of the liquid component include lubricating oils, plasticizers, antifogging agents, and antistatic agents and, from the standpoint of low classification property, kneadability, and transportability, the liquid component is preferably a lubricating oil or a plasticizer. Examples of the plasticizer include paraffinic hydrocarbons and naphthenic hydrocarbons and, in the case of producing a microporous film by extrusion molding, the plasticizer is preferably a paraffinic hydrocarbon, more preferably a liquid paraffin.

Foreign Matter Removability

The below-described criteria are used as indices for the removal of foreign matter of the resin pellet composition, such as unmelted gels (foreign matter removability). First, 5 wt.% to 60 wt.% of the resin pellet composition is dry-blended with a linear low-density polyethylene (LLDPE) having a melt index (MI) of 2 and a density of 0.940 g/cm$^3$ to prepare polyolefin pellets. Using a LABO-PLASTOMILL manufactured by Toyo Seiki Seisaku-sho, Ltd., the thus obtained polyolefin pellets are kneaded at 200°C and 50 rpm over a period of 10 minutes to obtain a molten resin. This molten resin is molded on a press plate at 10 MPa into a 500 $\mu$m-thick sheet, which is subsequently stretched at a ratio of 5 times longitudinally $\times$ 5 times transversally using a biaxial stretching machine, whereby a 20 $\mu$m-thick film is formed. At this point, the number of unmelted gels existing per 100 cm$^2$ of the thus formed film is preferably 10 or less, more preferably 5 or less, still more preferably 1 or less, yet still more preferably 0. In this case, the term "unmelted gel" refers to a gel that is generated due to defective dispersion of a high-molecular-weight component and has a diameter of more than 0.3 mm when observed with a magnifying glass or the like. A gel of less than 0.3 mm in diameter, or other contaminant or foreign matter is not counted as an unmelted gel.

**Method of Producing Resin Pellet Composition**

The method of producing a resin pellet composition according to the present disclosure includes, for example: the step of providing pellets used as a raw material of first pellets that are porous bodies (hereinafter, simply referred to as "first pellet raw material"), and a liquid component; and mixing these materials to partially impregnate the porous bodies of the first pellet raw material with some of the liquid component.

In this method, from the standpoint of production efficiency, it is more preferred to use a recycled resin. The first pellet raw material can be obtained from, for example, a microporous original film obtained after the extraction step in the process of producing a polyolefin microporous film. The first pellet raw material obtained from the microporous original film after the extraction step does not substantially contain the liquid component. Therefore, by mixing the first pellet raw material with the liquid component, the porous bodies of the first pellet raw material are partially impregnated with some of the liquid component, as a result of which the resin pellet composition of the present disclosure that contains the first pellets can be obtained.

When the resin pellet composition of the present disclosure further contains second pellets, a production method thereof is, for example, a method that includes: the step of providing the first pellet raw material in the form of porous bodies, pellets used as a raw material of the second pellets that are non-porous bodies each having a polyolefin-containing resin part and a liquid component part (hereinafter, simply referred to as "second pellet raw material"), and a liquid component; and mixing these materials to partially impregnate the porous bodies of the first pellet raw material with some of the liquid component.

A mixing order is not particularly limited and, for example, (1) the first pellet raw material and the liquid component may be mixed first to partially impregnate the porous bodies with some of the liquid component, and the resultant may be subsequently mixed with the second pellet raw material; or (2) the second pellet raw material (or a material obtained by mixing the second pellet raw material with a desired amount of the liquid component in advance) may be mixed with the first pellet raw material not containing the liquid component to partially impregnate the porous bodies of the first pellet raw material with some of the liquid component that is contained in the second pellet raw material or adhered to the surface of the second pellet raw material. From the standpoint of production efficiency, the method of (2) is preferred.

In the above-described method of (2), from the standpoint of production efficiency, it is more preferred to use a recycled resin. For example, a portion of a microporous original film obtained in the process of producing a polyolefin microporous film can be utilized for the production the first pellet raw material and the second pellet raw material. More specifically, a method of producing a polyolefin microporous film generally includes: the extrusion step of extruding a composition, which contains a polyolefin-containing resin and a liquid component, using an extruder to form a microporous original film; and the extraction step of extracting the liquid component from the microporous original film in the presence of an extraction solvent. In this case, the second pellet raw material can be obtained from the microporous original film after the extrusion step but before the extraction step, while the first pellet raw material can be obtained from the microporous original film after the extraction step. In this manner, the first pellet raw material and the second pellet raw material may be obtained by a series of steps of producing a polyolefin microporous film; however, the first pellet raw material may be obtained by one of the discrete steps of producing a polyolefin microporous film, while the second pellet raw material may be obtained by the other discrete step. In other words, the first pellet raw material may be obtained from a microporous original film that is obtained through the first extrusion step and the extraction step, in which steps a composition containing a polyolefin-containing resin and a liquid component is extruded using an extruder to form the microporous original film, while the second pellet raw material may be obtained from a microporous original film obtained by the second extrusion step that is different from the first extrusion step. The first pellet raw material obtained from the microporous original film after the extraction step does not substantially contain the liquid component. Therefore, by mixing the first pellet raw material with the second pellet raw material, the porous bodies of the first pellet raw material are partially impregnated with some of the liquid component that is contained in the second pellet raw material or adhered to the surface of the second pellet raw material, as a result of which the resin pellet composition of the present disclosure can be obtained.

Method of Producing Microporous Film

As a method of producing a microporous film, more specifically, but not limited to, the method disclosed in WO 2005/103127 (PTL 5), WO 2006/38532 (PTL 6), or the like may be employed. For example, in this method, a plasticizer is used as the liquid component. In addition, when a polyethylene having an Mv of 200,000 or more is used, from the standpoint of dispersing this polyethylene, a microporous film can be produced by a so-called wet method in which the raw material polyethylene and the plasticizer are mixed, melt-extruded, and then phase-separated at the time of cooling the resulting melt-extruded product using a casting apparatus or the like, after which the resultant is stretched and the plasticizer is removed by extraction with a solvent to form pores. According to this wet method, since crystals of the polyethylene having an Mv of 200,000 or more are swollen by the plasticizer, dispersion of a high-molecular-weight component is facilitated, with the result that a good-quality film is obtained at the time of mixing resin pellets with a conventional LLDPE.

The resulting microporous film has a porosity of preferably 10% to 80%, more preferably 20% to 65%, and an air permeability of preferably 10 sec/100 cc to 5,000 sec/100 cc, more preferably 50 sec/100 cc to 1,000 sec/100 cc.

Examples of the wet method include the method disclosed in WO 2006/38532 (PTL 6). The resulting microporous film may have a pore size of about 0.05 $\mu$m, and resin trunks around its pores may have a thickness of about 0.1 $\mu$m. In this case, a polyethylene high-molecular-weight component constituting the trunks is already dispersed to a level of 0.1 $\mu$m and, when polyolefin resin pellets are produced from this microporous film and the thus produced resin pellets are melt-kneaded with a general LLDPE, a film that not only exhibits extremely good dispersion of the high-molecular-weight component, but also is excellent in both strength and film quality can be obtained. The thickness of the trunks can be checked by observation under a scanning electron microscope or the like. The term "strength" used herein refers to, for example, tensile strength and tear strength with regard to a film and, in the present specification, the puncture strength of the film may be used as an evaluation criterion. Further, the term "film quality" used herein refers to the absence of fisheye or unmelted gel generated on the film surface. The film quality may be judged by observing, through a magnifying glass or visually, the number of fisheyes or unmelted gels in the film cut out in a size of 100-mm square.

As a method of producing resin pellets from the microporous film, for example, the method disclosed in Japanese Unexamined Patent Publication (Kokai) No. 2006-21519 (PTL 2) may be employed. Specifically, the first pellet raw material can be produced by: bundling the microporous original film obtained after the extraction step by itself; disposing the microporous original film in plural layers; folding the microporous original film into layers; cutting the microporous original film into pieces; or mixing the microporous original film with other resin raw material, subsequently binding them as desired by crimping, adhesion, fusion, or the like, and then cutting the resultant into a desired size. As a result of the crimping, adhesion, or fusion, porous bodies may partially form a non-porous portion.

Production of Second Pellet Raw Material

The second pellet raw material is produced by, for example, kneading a resin raw material such as a polyethylene with a plasticizer such as a lubricating oil using a twin-screw extruder, cooling and solidifying an original sheet extruded from a T-die using a casting apparatus, and then pulverizing or cutting the resulting cast original sheet using a pulverizer or the like. Alternatively, the second pellet raw material is produced by cutting a strand, which is produced by an ordinary strand die connected to the above-described extruder, using a commercially available strand cutter. The weight ratio of the resin raw material and the liquid component such as a lubricating oil is preferably in a range that yields the second pellets of the present disclosure; however, since the liquid component bleeds out from the second pellet raw material and is thereby partially lost, the amount of the liquid component may be greater than the desired amount by about 5%. The second pellet raw material can also be produced in the same manner as the first pellet raw material by: bundling the microporous original film obtained after the extrusion step but before the extraction step by itself; disposing the microporous original film in plural layers; folding the microporous original film into layers; cutting the microporous original film into pieces; or mixing the microporous original film with other resin raw material, subsequently binding them as desired by crimping, adhesion, fusion, or the like, and then cutting the resultant into a desired size.

Kneading/Extrusion

The second pellet raw material can be obtained by, for example, extruding a raw material composition obtained by blending prescribed amounts of a resin raw material (polyethylene) and a liquid component (liquid paraffin) using a single extruder, cast-molding the thus extruded composition to prepare a microporous original film, and then pulverizing or cutting this original film into a desired size.

One example of a method of kneading a resin composition used as a raw material is a method which includes:

the step of kneading in advance a raw material resin and, depending on the case, a plasticizer, using a Henschel mixer or a tumbler mixer; and the step of putting the resulting kneaded product into an extruder, introducing the plasticizer at an arbitrary ratio up to a prescribed amount as required while heat-melting the kneaded product in the extruder, and further kneading the resultant. This method can yield a sheet with favorable dispersion of the resin composition.

As the melt extruder, for example, a twin-screw extruder can be used. This enables to apply a strong shear force to the resin composition; therefore, the dispersion thereof is further improved when the raw material is a polymerized powder. The LID value of the screws of the twin-screw extruder is preferably about 20 to 70, more preferably 30 to 60. It is noted here that L represents the screw length, and D represents the screw diameter. As the screws, those provided with a full flight portion and a kneading portion such as a general kneading disk or rotor can be used. Meanwhile, when the polymerized powder has already been processed into pellets as a resin raw material, a single-screw extruder can be used as well.

In the extrusion step, the content of the plasticizer in a microporous film layer is selected as desired, and it is preferably not less than 40 wt.%, more preferably not less than 50 wt.%, still more preferably not less than 60 wt.%. However, an excessively large amount of the plasticizer leads to an increase in the amount of bleeding in the casting step, causing slippage and the like between rolls. The content of the plasticizer is preferably 90 wt.% or less.

A die to be fitted to the tip of the extruder is not particularly limited and, for example, a T-die is used. In the case of using inorganic particles, an inorganic filler, or a readily degradable resin composition, a die provided with measures for reducing friction or adhesion caused by these materials, for example, a die whose flow channel or lip has been processed with TEFLON (registered trademark), ceramic, nickel, or molybdenum, or coated with hard chromium is preferably used. A co-extrusion die may be used to prepare a composite original film.

Casting Step

The molten resin extruded from the die is introduced to, for example, a casting apparatus, and can be made into a microporous original film (a precursor of a microporous film laminate). This original film has a thickness at which the original film can be easily handled as the second pellet raw material, and the maximum length of the original film is preferably 1 mm to 10 mm, more preferably 2 mm to 6 mm. The thus obtained sheet-like microporous original film is cut, whereby the second pellet raw material can be obtained.

Production of First Pellet Raw Material

The below-described steps for obtaining the first pellet raw material may be continuously performed on the microporous original film obtained by the above-described kneading/extrusion and casting steps performed for the production of the second pellet raw material, or may be performed on a microporous original film obtained through other kneading/extrusion and casting steps that are different from those performed for the production of the second pellet raw material.

Stretching Step

The microporous original film obtained in the casting step is stretched (stretching step). The stretching in this process is preferably biaxial stretching, more preferably simultaneous biaxial stretching or sequential biaxial stretching. The stretching temperature is in a range of preferably 100°C to 155°C, more preferably 110°C to 140°C. From the standpoint of the film strength, the stretching ratio is 3 to 200 in terms of area ratio. The stretching step may be performed biaxially or uniaxially, and may be omitted if it is not necessary.

Extraction/Porosification Step

The microporous original film prior to being co-stretched is immersed in an extraction solvent and porosified by extraction of the plasticizer (liquid component) (extraction/porosification step), after which the resulting film is sufficiently dried. In the case of extracting only the plasticizer, it is preferred that the extraction solvent be a poor solvent for polyolefins and the like but a good solvent for the plasticizer, and have a boiling point lower than the melting point of the raw material resin. Examples of such an extraction solvent include: chlorine-based solvents, such as methylene chloride and 1,1,1-trichloroethane; ketones, such as methyl ethyl ketone and acetone; halogen-based organic solvents, such as hydrofluorocarbons, hydrofluoroethers, cyclic hydrofluorocarbons, perfluorocarbons, and perfluoroethers; ethers, such as diethyl ether and tetrahydrofuran; hydrocarbons, such as n-hexane and cyclohexane; and alcohols, such as methanol and isopropyl alcohol. A combination of two or more of these extraction solvents may be used as well. Among the above- exemplified solvents, methylene chloride is particularly preferred. The porosification step may be performed before or after the co-stretching step. The porosification step may be performed by multistage extraction using plural extraction tanks. Examples of the extraction solvent of the inorganic filler include alkali water. It is noted here that the inorganic filler may be left in the microporous film or an auxiliary layer for the purpose of improving the strength and the like, or may be removed in an extraction tank.

Heat Setting Step

After the extraction of the plasticizer, the resulting film may be heat-set by hot stretching as required for the purpose of adjusting the film properties such as film thickness and air permeability, or inhibiting heat shrinkage of the film. Examples of this post-extraction stretching include uniaxial stretching, simultaneous biaxial stretching, sequential biaxial stretching, and transverse uniaxial stretching. The stretching temperature is preferably 100°C to 155°C. The stretching ratio is preferably more than 1 but 10 or less in terms of area ratio. In the case of performing a heat treatment for dimensional stabilization of the microporous film, in order to reduce the shrinkage of the film in a high-temperature atmosphere, the heat treatment can be performed, for example, at a temperature of 100°C to 150°C using a biaxial stretching machine, a uniaxial stretching machine, or both. Preferably, the heat treatment is performed by relaxing the ratio and/or the stress in either or both of the width direction and the length direction in a temperature range of not higher than the melting point of the resin constituting the original film, a target layer, or an auxiliary layer. The heat setting temperature is more preferably 110°C to 140°C, most preferably 120°C to 140°C. By the above-described steps, a microporous film is produced.

Pelletization

The microporous film or the like produced in the above-described manner is pelletized to produce the first pellet raw material. As a production method, for example, the method disclosed in Japanese Unexamined Patent Publication (Kokai) No. 2006-21519 (PTL 2) may be employed. Specifically, the first pellet raw material can be produced by: bundling a polyethylene raw material prepared in advance, such as a polyethylene film or the above-described microporous film, by itself; disposing the polyethylene raw material in plural layers; cutting the polyethylene raw material into pieces; or mixing the polyethylene raw material with other resin raw material (e.g., a film) by weaving or the like, subsequently binding them using, for example, a pressure applied by a pinch roll, embossed pinch roll or the like, and then cutting the resultant into a desired size. Each layer of the single microporous film or the like that constitutes the first pellet raw material may have a thickness of 500 $\mu$m or less. From the standpoint of productivity, ease of handling, general versatility and the like, the first pellet raw material preferably contains two or more kinds of resin films having different resin formulations.
Any known method, for example, a method in which a film wound on a paper tube or the like in advance is, in a state of being disposed in several layers as is, compressed with a roller or the like in the thickness direction and then cut out into a size of about 6 mm square, or a method in which a film produced by the method disclosed in Japanese Unexamined Patent Publication (Kokai) No. 2006-21519 (PTL 2) is compressed with a roller while being bundled in the width direction and then cut out in the length direction, may be employed.
When the first pellet raw material has a fibrous portion, the ultrahigh-molecular-weight polyethylene fibers disclosed in Japanese Patent Publication (Kokoku) No. H6-15721 (PTL 7) or fibers produced by the method disclosed in Japanese Patent No. 4623780 (PTL 8) can be used. Similarly to the thickness of the film, the fibers used for the formation of the fibrous portion also have a fiber diameter of preferably 500 $\mu$m or less, more preferably 50 $\mu$m or less.
The above-described film, microporous film, fibers, and the like can be used singly or in combination for the formation of a portion of the first pellet raw material. For example, the microporous film containing a polyethylene as a main component may be used in combination with a non-porous film containing a polypropylene as a main component.
The first pellet raw material may contain a known antioxidant, such as a phenolic antioxidant, phosphorus-based antioxidant, or a sulfur-based antioxidant. The content of the antioxidant in the first pellet raw material can be adjusted in accordance with the intended use of the resin pellet composition, and it is generally in a range of 100 PPM to 1 wt.%.
The first pellet raw material (and the first pellets) may also contain an additive for modification of the first pellets. Examples of the additive include: antifogging agents such as glycerol esters; slipping agents typified by fatty acid amides, such as erucic acid, stearic acid, and oleic acid; antistatic agents; inorganic fillers, such as silica and alumina; liquid paraffin; and lubricating oils and internal lubricants, such as calcium stearate.
From the standpoint of productivity, environmental concerns, ease of handling, and the like, the pellet raw materials (and the first pellets) may be recycled resin pellets.
FIG. 3 provides schematic drawings each illustrating one example of a production line of the first and the second pellet raw materials. In FIG. 3(a), two microporous films unwound from two rolls (1 and 2) are bundled together, crimped by embossing rollers or compression rollers (3), and then cut into the form of pellets in the MD direction using a cutter (4) provided inside an apparatus, and the pellets can be collected in a pellet container (5). In this step, it is preferred not to perform heating with an external heat source such as a heater. The rollers (3) are preferably embossing rollers that perform point crimping. In FIG. 3(a), two microporous films unwound from the two rolls (1 and 2) are illustrated; however, plural regions of a single microporous film may be bonded together by, for example, unwinding a portion from only one of the rolls (1) and then folding or compressing the portion (not illustrated). By adjusting the conditions of these operations of bundling, laminating, cutting, mixing and press-bonding with other resin raw material, and the like, the first and the second pellet raw materials having various structures in a folded, separable, or laminated form can be obtained. FIG. 3(b) is a schematic drawing that illustrates one example of a production line of the first and the second pellet raw materials having such a cross-sectional shape of the resin pellets (d). A microporous film unwound from the roll (1) is bundled in a rolled or folded manner and then cut into the form of pellets in the MD direction using the cutter (4), whereby the resin pellets (d) in the form of a rolled or folded planar film can be obtained.

In a conventional method of producing resin pellets, for example, when a high-density polyethylene (HDPE) is used, pellets having a maximum length of about 2 mm to 5 mm are obtained by melt-kneading and extruding a resin powder, which is polymerized in a polyethylene production plant, into a string form using an extruder, and then cutting this molten resin, whereas in a method using the above-described microporous original film (film), a laminate in which the film is laminated in preferably plural layers, more preferably several hundred layers, can be obtained.

Mixing of First Pellet Raw Material and Second Pellet Raw Material

For the mixing of the first pellet raw material and the second pellet raw material, a known blending means such as a Henschel mixer, a tumbler mixer, or a flash blender (manufactured by ACO Co., Ltd.) is used. A mixing ratio may be selected as desired. After the mixing, when the liquid component of the second pellet raw material is in excess and causes stickiness, the first pellet raw material is allowed to absorb the excess liquid component and eliminate the stickiness by leaving the resulting mixture to stand for about 1 minute to 60 minutes after the completion of the mixing, which is more preferred. By this mixing, some of the liquid component contained in the second pellet raw material is transferred to the first pellet raw material, and the porous bodies of the first pellet raw material are thereby partially impregnated with some of the liquid component, as a result of which the resin pellet composition of the present disclosure is obtained.

A method of obtaining the second pellets that have the "weight of the liquid component existing on the outer surfaces", the "weight of the liquid component existing inside", the "angle of repose", or a combination thereof as preferred in the present disclosure includes, for example, removing some of the liquid component contained in the second pellet raw material obtained in the above-described "Production of Second Pellet Raw Material". Examples of a method of this removal include, but not particularly limited to, a method of bringing the second pellet raw material into contact with a porous material or the like capable of absorbing the liquid component and thereby transferring some of the liquid component to the porous material. A more preferred example is a method of mixing the first pellet raw material and the second pellet raw material in the above-described manner and thereby transferring some of the liquid component contained in the second pellet raw material to the first pellet raw material. This also enables to simultaneously obtain the first pellets that have the "weight of the liquid component existing on the outer surfaces", the "weight of the liquid component existing inside", the "angle of repose", or a combination thereof as preferred in the present disclosure. The thus obtained mixture of the first pellets and the second pellets may be used directly as the resin pellet composition of the present disclosure, or may be separated into the first pellets and the second pellets to be each used as the resin pellet composition of the present disclosure.

**Mode of Use of Resin Pellet Composition**

The resin pellet composition of the present disclosure can be itself used for the production of a desired molded product. Preferably, the resin pellet composition of the present disclosure may be mixed with other resin pellets and other materials such as additives (hereinafter, each referred to as "material to be mixed") to obtain a mixed resin composition, and this may be used for the production of a desired molded product. For example, the resin pellet composition of the present disclosure may be mixed with and/or added to a material to be mixed that contains an HDPE, an LDPE, an LLDPE, or the like as a main component, such as pellets, a powder, particles, a slurry, or a paint, by a dry-mixing method, a wet-mixing method, or the like to obtain a mixed resin composition, and this can be used for the production of a molded product. As the dry-mixing method, a melt-mixing method using an ordinary single-screw or twin-screw extruder, or the method disclosed in Japanese Unexamined Patent Publication (Kokai) No. 2006-21519 (PTL 2) can be employed. The resulting mixed resin composition has excellent transportability and kneadability with liquid components and is unlikely to undergo classification; therefore, by using this mixed resin composition for film production, a film having excellent quality in which the amount of unmelted gels impairing the optical properties are reduced can be obtained. Further, when the mixed resin composition contains a high-molecular-weight component, the generation of unmelted gels during extrusion can be reduced or eliminated despite the presence of the high-molecular-weight component, with the result that the strength of the resulting film can be greatly improved. Examples of the film include films produced by extrusion molding such as inflation molding and microporous films produced by a wet method, and the film is preferably a microporous film.

In the film production, from the standpoint of strength, optical properties, or foreign matter removability of the resulting film, the material to be mixed is preferably an LDPE or an LLDPE, particularly an LLDPE obtained using a metallocene catalyst as a raw material. For example, a mixed resin composition obtained by dry-blending the resin pellet composition of the present disclosure with a conventional relatively low-molecular-weight polyethylene such as an LDPE or an LLDPE is excellent in transportability, low classification property, and kneadability with liquid components. Therefore, when a film is produced using this mixed resin composition, a film having excellent quality in which the amount of unmelted gels impairing the optical properties are reduced can be obtained. When the mixed resin composition contains a high-molecular-weight component, the strength is greatly improved while the generation of unmelted gels is inhibited.

When the material to be mixed contains an LLDPE, the density of the LLDPE is in a range of preferably 900 to 945 kg/m$^3$, more preferably 910 to 940 kg/m$^3$, still more preferably 915 to 940 kg/m$^3$. Further, the melt flow rate (MFR) of the LLDPE is in a range of preferably 0.1 to 50, more preferably 0.1 to 10, still more preferably 0.3 to 4.0.

In order to use the mixed resin composition for film production and improve the strength of the resulting film, the material to be mixed is preferably an LLDPE that is polymerized using a metallocene catalyst along with hexene or octene as a comonomer component, and the molecular weight distribution of this LLDPE is preferably 3 or more but less than 15, more preferably 5 or more but less than 10.

The amount of the resin pellet composition of the present disclosure to be added to the relatively low-molecular-weight polyethylene such as an LLDPE or an LDPE is preferably 5 wt.% to 60 wt.% from the standpoint of the strength of the resulting molded product and the removability of unmelted gels, and it is more preferably 10 wt.% to 40 wt.% with consideration of the optical properties of the molded product. Taking into consideration the extrudability of the mixed resin composition as well, the amount of the resin pellet composition of the present disclosure to be added is still more preferably 10 wt.% to 30 wt.%.

In order to improve the heat resistance of the resulting film, a polypropylene can be mixed into the mixed resin composition. In this case, from the standpoint of removing fisheyes, the viscosity-average molecular weight (Mv) of the polypropylene is preferably 13,000,000 or less, more preferably 700,000 or less, still more preferably 600,000 or less. From the standpoint of the strength of the resulting molded product containing the polyethylene and this polypropylene, the MV of the polypropylene is preferably not less than 100,000, more preferably not less than 200,000. From the same standpoint, it is preferred to use, as a material to be mixed, a polypropylene whose stereoregularity has been reduced by utilizing a metallocene catalyst or the like, or a resin composition obtained by blending an isotactic polypropylene (IPP) with 0.5 to 30 wt.% of a block polypropylene (BPP) or a random polypropylene (RPP).

In addition to the resin pellet composition of the present disclosure, the mixed resin composition may also contain at least one additive selected from the group consisting of other resin component, an inorganic filler, an organic filler, an antioxidant, a dispersion aid, an antistatic agent, a process stabilizer, a crystal nucleating agent, an internal lubricant, and the like. The ratio of each of these additives in the mixed resin composition is preferably 5 wt.% or less, more preferably 2 wt.% or less, and it may be substantially 0 wt.%.

The resin component may be, for example, a thermoplastic resin selected from: engineering plastic resins such as polyphenylene ether; polyamide resins such as nylon 6, nylon 6-12, and aramid resin; polyimide resins; polyester resins such as PET and PBT; polycarbonate resins; fluorine-based resins such as polyvinylidene fluoride (PVDF); copolymers of ethylene and vinyl alcohol; copolymers of a $C_2$ to $C_{12}$ $\alpha$-olefin and carbon monoxide, and hydrogenation products thereof; hydrogenation products of styrene-based polymers; copolymers of styrene and an $\alpha$-olefin, and hydrogenation products thereof; copolymers of styrene and an aliphatic monounsaturated fatty acid; polymers of acrylic acid and an acrylic acid derivative; and copolymers of styrene and a conjugated diene-based unsaturated monomer, and hydrogenation products thereof, or may be a polyketone, polybutene-1, polymethylpentene-1, or the like.

Examples of the inorganic filler include: oxide-based ceramics, such as alumina (e.g., $\alpha$-alumina), silica, titania, zirconia, magnesia, ceria, yttria, zinc oxide, and iron oxide; nitride-based ceramics, such as silicon nitride, titanium nitride, and boron nitride; ceramics, such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fibers, and these inorganic fillers may be used singly, or as a mixture of plural kinds thereof.

Examples of the antioxidant include: phenolic antioxidants, such as "IRGANOX 1010", "IRGANOX 1076", and "BHT" (all of which are trademarks and manufactured by Ciba Specialty Chemicals Inc.); phosphorus-based and sulfur-based secondary antioxidants; and hindered amine-based anti-weathering agents, and these antioxidants and anti-weathering agents may be used singly, or as a mixture of plural kinds thereof.

From the standpoint of the strength, optical properties, and foreign matter removability of a molded product obtained from the mixed resin composition, a combination of phenolic antioxidant and a phosphorus-based antioxidant is preferably used. Specifically, pentaerythrityl-tetrakis[3-(3,5-di-*t*-butyl-4-hydroxyphenyl)propionate], octadecyl-3-(3,5-di-*t*-butylhydroxyphenyl)propionate, 1,3,5-trimethyl-2,4,6-tris(3,5-di-*t*-butylhydroxybenzyl)benzene, tris(2,4-di-*t*-butylphenyl)phosphite, tetrakis(2,4-di-*t*-butylphenyl)-4,4'-biphenylene phosphite, 6-[3-(3-t-butyl-4-hydroxy-5-methylphenyl)propoxy]-2,4,8,10-tetra-*t*-butyldibenzo[d,f][1,3,2]dioxaphosphepine, and the like are preferred.

The amount of the antioxidant to be incorporated is preferably 100 ppm to 10,000 ppm with respect to a total resin solid content of a microporous film formed from the mixed resin composition. When a phenolic antioxidant and a phosphorus-based antioxidant are used in combination, their weight ratio (phenolic antioxidant/phosphorus-based antioxidant) is preferably 1/3 to 3/1.

As a dispersing aid of the polypropylene and the polyethylene, for example, a hydrogenated styrene-butadiene-based elastomer or an elastomer obtained by copolymerization of ethylene and propylene can be used. The amount of the dispersing aid to be incorporated is preferably 1 to 10 parts by weight with respect to a total of 100 parts by weight of the polypropylene and the polyethylene.

Examples of the antistatic agent include: amines, such as alkyldiethanolamines and hydroxyalkylethanolamines; amine esters, such as stearyldiethanolamine mono-fatty acid esters; alkyloamides, such as lauric acid diethanolamide and stearic acid diethanolamide; mono-fatty acid esters, such as glycerin and diglycerin; anionic antistatic agents, such as alkylbenzenesulfonates; and polyoxyethylene alkyl ethers, and these antistatic agents may be used singly, or in combination of plural kinds thereof. The amount of the antistatic agent to be incorporated is preferably 500 ppm to 10,000 ppm with respect to a total resin solid content of a microporous film formed from the mixed resin composition.

The mixed resin composition may also contain, as an internal lubricant, for example, calcium stearate, magnesium stearate, or a hydrate thereof, such as sodium 12-hydroxystearate. In this case, the content of the internal lubricant is preferably in a range of 50 ppm to 5,000 ppm.

The resin pellet composition of the present disclosure can be used for the production of a molded product. For example, the resin pellet composition of the present disclosure can be molded by various methods, such as extrusion molding, injection molding, blow molding, and in-mold molding. The thus obtained molded product has excellent optical properties, strength, and foreign matter removability, and is thus preferably a packaging film or an agricultural film.

EXAMPLES

**Methods of Measuring Physical Property Values**

Thickness of Each Layer and Total Thickness ($\mu$m)

The thickness of each layer was measured by cross-sectional observation under a general scanning electron microscope (S4100, manufactured by Hitachi, Ltd.).

Viscosity-Average Molecular Weight (Mv)

The limiting viscosity [$\eta$] at 135°C in a decalin solvent was determined in accordance with ASTM-D4020. The Mv of a polyethylene and that of a polypropylene were calculated using the following equations:

$$\text{Polyethylene: } [\eta] = 6.77 \times 10^{-4} \, \text{Mv}^{0.67}$$

$$\text{Polypropylene: } [\eta] = 1.10 \times 10^{-4} \, \text{Mv}^{0.80}$$

Porosity (%) of Microporous Film

From the weight of a 100 mm square sample of a microporous film, the basis weight W (g/cm$^2$) and the average density $\rho$ (g/cm$^3$) of the components (resin and additives) constituting the microporous film were determined. The porosity of the microporous film was calculated from the thickness d (cm) of the microporous film using the following equation:

$$\text{Porosity of all layers (\%)} = (100 - \text{W/(d} \times \rho)) \times 100$$

Air Permeability (sec/100 cc) of Microporous Film

The air permeability of a microporous film was measured in accordance with JIS P-8117 using a Gurley air permeability tester "G-B2" (manufactured by Toyo Seiki Seisaku-sho, Ltd., trademark). It is noted here that the values shown in Table 1 are 20 $\mu$m-equivalent air permeability values that were determined by proportional calculation based on a total thickness.

Puncture Strength (gf)

The puncture strength (gf) was determined by conducting a puncture test using a handy compression tester "KES-G5" (manufactured by Kato Tech Co., Ltd., trademark) under the following conditions: radius of curvature of needle tip = 0.5 mm, and puncture speed = 2 mm/sec. It is noted here that the values shown in Table 3 are 20 $\mu$m-equivalent puncture strength values that were determined by proportional calculation based on a total thickness.

Pore Size ($\mu$m) of Microporous Film

The pore size was determined from a surface image that was photographed in surface observation under a general scanning electron microscope (S4100, manufactured by Hitachi, Ltd.).

Amount of Liquid Component That Can Be (Further) Added (wt.%)

After measuring the weight of first pellets and/or second pellets, the pellets were immersed in (exposed to) an excess amount of a liquid component and left to stand for 12 hours at normal temperature. Subsequently, 10 particles of the pellets were taken out and sandwiched with tissue papers from above and below, and the liquid component on the surfaces of the pellets was gently wiped off (in about 1 minute). The weight was measured after confirming the removal of the liquid component from the surfaces. The amount of the liquid component that can be contained was calculated from the change in the weight of the pellets before and after the immersion in the liquid component.

Porosity (%) of Second Pellets After Extraction of Liquid Component

The porosity (%) of the second pellets after extraction of the liquid component is calculated from the weight of the second pellets measured before and after removing the liquid component by extraction. First, 10 g of the second pellets is weighed. Next, the thus weighed second pellets are immersed in an excess amount (about 1,000 g) of an extraction solvent of the liquid component to remove the liquid component by extraction for a required period. For example, when the liquid component is a liquid paraffin, methylene chloride can be used as the extraction solvent, and the extraction may be performed for about 24 hours. Thereafter, the weight W1 of the pellets is measured. Taking the amount of the extracted liquid component as W2, the following is established: W1 + W2 = 10 g. The porosity is calculated by the following equation, where the density of the liquid component of the second pellets is denoted as PL, and the density of a resin component of the second pellets is denoted PR:

$$\text{Porosity } (\%) = 100*(\text{W2/PL})/(\text{W1/PR} + \text{W2/PL})$$

Porosity (%) of First Pellets after Extraction of Liquid Component

The first pellets are impregnated with a large excess amount of the liquid component and left to stand for at least 12 hours at normal temperature. When the pellets float, the pellets are, for example, pushed down and submerged into the liquid component with a lid or the like, whereby the liquid component is impregnated into micropores of the first pellets to completely replace the air in the micropores. Thereafter, the first pellets are taken out, and the liquid component on the surfaces of the first pellets is wiped off with another clean microporous film, tissue paper, or the like. The first pellets impregnated with the liquid component therein are produced in this manner, and the porosity thereof is calculated in the same manner as described above for the porosity of the second pellets. For example, when the first pellets are each formed of a microporous film as a constituent, the porosity of the first pellets is close to that of the microporous film in principle; however, when the microporous film is partially press-bonded, the pores of the press-bonded part may be blocked, and the porosity of the first pellets thus tends to be lower than that of the microporous film.

Bulk Density (g/cm$^3$) of Pellets after Extraction of Liquid Component

After extracting the liquid component from the pellets by the above-described method, the bulk density of the pellets was measured in accordance with the standard SAP01-79 prescribed by The Association of Powder Process Industry and Engineering, Japan.

Weight of Liquid Component Existing on Outer Surfaces of Pellets>

The weight of the liquid component existing on the outer surfaces of the first and the second pellets was measured by the following method. First, 20 g of the pellets to be measured was collected. The thus collected 20 g of the pellets to be measured was wrapped with a 1-m square sheet having a thickness of 0.6 mm in which plural 6 $\mu$m-thick polyethylene microporous films having a porosity of 38%, a puncture strength of 280 gf, and a pore size of 0.06 $\mu$m were stacked. This sheet was rubbed from outside with a hand to wipe off the liquid component existing on the outer surfaces of the pellets. This wiping operation caused the liquid component to infiltrate into a part of the polyethylene microporous films and fill the pores of the microporous films, as a result of which the color of this part changed from white to translucent. This wiping operation was repeated multiple times while replacing the sheet until the liquid component no longer infiltrated into the sheet, i.e. a change in the color of the polyethylene microporous films was no longer visually observable. After the completion of the wiping operation, the weight of the pellets was measured. The difference in the weight of the pellets before and after the wiping operation was calculated as the amount of the liquid component existing on the outer surfaces of the pellets. It is noted here that, since the difference in the weight was to be measured before and after the wiping operation, sufficient care was taken not to spill any pellet during the measurement, with the result that even very small particles of the pellets were quantitatively collected.

Weight of Liquid Component Existing Inside Pellets

The weight of the pellets after the removal of the liquid component from the outer surfaces of the pellets was measured in the same manner as the above-described measurement of the weight of the liquid component existing on the outer surfaces of the pellets. Subsequently, the liquid component was removed from the pellets by extraction with a solvent, and the weight of the pellets was measured thereafter. The solvent is not limited, as long as it is capable of extracting and removing the liquid component from the pellets and, for example, when the liquid component is a liquid paraffin, methylene chloride can be used as the extraction solvent. The difference in the weight of the pellets before and after the removal of the liquid component by extraction was calculated as the weight of the liquid component existing inside the pellets.

Angle of Repose

The angle of repose of the first pellets and that of the second pellets were measured by the following method conforming to JIS R9301-2-2:1999, i.e. a method in which sample pellets are dropped onto a horizontal substrate from a funnel set at a certain height, and the base angle is calculated from the diameter and the height of the resulting conical deposit and defined as the angle of repose. The nozzle inner diameter of the funnel is 20 mm, and the tip of the nozzle is adjusted and fixed at a height of 200 mm from the substrate surface. The sample pellets in an amount of 200 g are collected in a glass beaker and, with care being taken not to vibrate the funnel, the beaker is tilted to supply 200 g of the pellets from a height of about 100 mm from the upper edge of the funnel over a period of about 60 seconds. In this process, the dropping rate is maintained constant, and the pellets are supplied in a circular motion along the funnel wall circumference, rather than being dropped to the center of the funnel. In this manner, a conical mound (conical deposit) of the pellets is formed on the substrate. This conical mound is observed from a side, and the angle of the inclined surface of the conical mound with respect to the horizontal plane is defined as the angle of repose.

Low Classification Property (Variation in Bulk Density)

Measurement was performed by the following method conforming to JIS Z2504. A resin pellet composition in an amount of 20 kg was put into a raw material hopper having a circular truncated cone shape of 600 mm in height, 400 mm in upper diameter, and 250 mm in lower diameter, in which the lower part was constituted by a hemispherical dome and provided with an opening for extraction of a raw material from the bottom end of the dome. Immediately thereafter, a resin was extracted from the upper surface of the raw material into a 200-cc cup five times, and the first bulk density was determined from the average weight of the extracted resin. Subsequently, 15 kg of the raw material was extracted from the lower opening of the hopper, and the second bulk density was determined in the same manner. In this process, a bulk density ratio (first bulk density/second bulk density) was defined as the variation in bulk density. The variation in bulk density was evaluated as follows, where an evaluation of "A" was deemed to be acceptable.

A: The bulk density ratio was in a range of 0.95 to 1.05.
B: The bulk density ratio was lower than 0.95, or higher than 1.05.
D: A film was not formable.

Pipe Transportability

A resin raw material composition for microporous film to be measured was prepared in an amount of 5 kg, and transported to a height of 2 m using a pneumatic transport autoloader connected with a polyvinyl chloride hose of 5 m in length. The bulk density ratio before and after the transport (before transport/after transport) was determined in the same manner as the above-described measurement of the low classification property. An evaluation of "A" was deemed to be acceptable.

A: The bulk density ratio was in a range of 0.95 to 1.05.
B: The bulk density ratio was lower than 0.95, or higher than 1.05.
D: A film was not formable.

Fluctuations in Extrusion

In the extrusion step, fluctuations in the resin pressure at the outlet of an extruder were measured for 1 minute, and the difference between a maximum pressure and a minimum pressure (ΔP) was determined. Evaluations of "A" and "B" were deemed to be acceptable.

A: ΔP was less than 0.5 MPa.
B: ΔP was 0.5 MPa or more but less than 1 MPa.
D: ΔP was 1 MPa or more, or a film was not formable.

Unmelted Gels

The below-described criteria were used as indices for the removal of foreign matter of a resin pellet composition, such as unmelted gels (unmelted gels or undispersed gels). First, a liquid paraffin was added to the resin pellet composition. The amount of the added liquid paraffin and the amount of the liquid paraffin already contained in the resin pellet composition was 65 wt.% in total. This resin pellet composition was kneaded at 160°C and 50 rpm for 2 minutes to obtain a molten resin. The thus obtained molten resin was molded on a press plate at 10 MPa into a 500 $\mu$m-thick sheet, which was subsequently stretched at a ratio of 5 times longitudinally × 5 times transversally using a biaxial stretching machine, whereby a 20 $\mu$m-thick film was formed. At this point, the number of unmelted gels existing per 100 cm$^2$ of the thus formed film was evaluated based on the following criteria.

A: The number of unmelted gels was 0.
B: The number of unmelted gels was 1 to 5.
D: The number of unmelted gels was 6 or more, or a film was not formable.

In this case, the term "unmelted gel" refers to a gel that is generated due to defective dispersion of a high-molecular-weight component and has a diameter of more than 0.3 mm when observed with a magnifying glass or the like. A gel of less than 0.3 mm in diameter, or other contaminant or foreign matter is not counted as an unmelted gel.

**Production Examples of Resin Pellet Compositions**

Example 1

(1) Production of Second Pellet Raw Material

In the production of a second pellet raw material, as described below, a microporous film mainly containing a high-molecular-weight polyethylene as a component was used. First, using 90 wt.% of a powder-form polyethylene (HDPE1) having a viscosity-average molecular weight of 400,000 and 10 wt.% of a polypropylene (PP1) having a viscosity-average molecular weight of 700,000 as raw material resins, 0.3 parts by weight of tetrakis[methylene-(3',5'-di-*t*-butyl-4'-hydroxyphenyl)propionate]methane as an antioxidant was mixed with respect to 100 parts by weight of the raw material resins. These raw materials were stirred using a Henschel mixer to prepare a raw material.
Next, the thus obtained raw material was put into a twin-screw extruder (orifice diameter = 41 mm, LID = 49). In the middle of the cylinder of this extruder, 200 parts by weight of a liquid paraffin (LQ1, kinematic viscosity at 38°C: 75.9 cSt, density: 868 kg/m$^3$) was injected. It is noted here that a 150-mesh screen and a quantitative gear pump were arranged between the extruder and a die. The temperature of the die and that of the extruder were set at 200°C. A T-die was used as the die. A molten original film extruded from the die was solidified by cooling on a casting roll to mold a 0.8 mm-thick cast original sheet. This cast original sheet was pulverized at normal temperature using a sheet pulverizer, whereby a pellet raw material having a maximum length of 5 mm was obtained. This was used as a second pellet raw material.

The surface of the second pellet raw material obtained in this manner was sticky due to an excess amount of the bleeding liquid component, and this caused the pellets to adhere to each other, making pneumatic pipe transport or the like impossible.

(2) Production of First Pellet Raw Material

The above-obtained cast original sheet was stretched to an area ratio of 100 times using a biaxial stretching machine at 120°C and immersed in methylene chloride, and the liquid paraffin was removed by extraction, followed by drying. The resulting sheet was further heat-treated in a heating furnace at 130°C to obtain a microporous film of about 6 $\mu$m in thickness. During the production of this microporous film, fluctuations in extrusion occurred, leaving a large amount of undispersed gels. This is presumed to be caused by classification of powder portion and pellet portion in the raw material.

The thus obtained microporous film was slit to a width of 350 mm and wound on a paper tube. The microporous film had a length of 300 m. This microporous film was observed with some amount of unmelted gels and the like. This microporous film had an average pore size of 0.05 $\mu$m, with pores being uniformly formed over the entire surface.

The microporous film was rolled into a long string along the MD and press-bonded using an embossed pinch roll, after which the resultant was cut using a commercially available strand cutter to obtain a white first pellet raw material in the form of micro sheets having a maximum length of 6 mm.

When a single grain of the first pellet raw material was picked up and loosened by hand, the grain was partially separated and this enabled to take out the original microporous film; however, a large portion of the grain was bonded. There were particulate components that were disintegrated into plural parts, while many grains were not disintegrated into plural parts. When a liquid paraffin was applied dropwise to the first pellet raw material, the first pellet raw material mostly changed in color from white to translucent. This suggested that some of the liquid paraffin was absorbed by the first pellet raw material.

(3) Mixing of First Pellet Raw Material and Second Pellet Raw Material

The above-obtained first pellet raw material in an amount of 50 wt.% and the above-obtained liquid paraffin-containing second pellet raw material in an amount of 50 wt.% as a whole (including 35 wt.% of the resin component and 65% of the liquid paraffin) were weighed in a total of 10 kg and put into an 80-L tumbler mixer. These raw materials were stirred at 30 rpm for 5 minutes, and the resulting mixture was left to stand for 30 minutes. In this manner, the resin pellet composition of the present disclosure was obtained. In other words, this mixture contained 32.5 wt.% of liquid paraffin as a whole. The content of the first pellets and that of the second pellets in the resin pellet composition (R) obtained after leaving the mixture to stand for 30 minutes, as well as the amount of liquid paraffin contained in the respective pellets are shown in Tables 2 and 3. The first pellets are impregnated with some of the liquid paraffin contained in the second pellets.

(4) Production of Microporous Film for Evaluation

Using the resin pellet composition obtained by the above-described method of (1) to (3) as a raw material resin, a liquid paraffin was further added thereto in an extruder up to a total amount of 70 wt.%, and a cast original sheet was obtained in the same manner as in the above-described (1). The thus obtained cast original sheet was stretched to an area ratio of 45 times using a biaxial stretching machine at 120°C and immersed in methylene chloride, and the liquid paraffin was removed by extraction, followed by drying. The resulting sheet was further heat-treated in a heating furnace at 130°C to obtain a microporous film of 6 $\mu$m in thickness. The thus obtained microporous film was slit to a width of 30 cm and wound on a paper tube. This microporous film had a length of 300 m.

The microporous film produced from the resin pellet composition in Example 1 exhibited favorable performance in all of low classification property, unmelted gels, fluctuations in extrusion, and pipe transportability. As for the physical properties of this microporous film, the surface condition was extremely favorable, and unmelted gels and the like of a high-molecular-weight component were not observed at all. Accordingly, the microporous film had a high strength as well. The microporous film had an average pore size of 0.05 $\mu$m, with pores being uniformly formed over the entire surface. In addition, the first pellets removed from the resin pellet composition were able to further contain 1 wt.% or more of the liquid component based on their weight.

Examples 2 to 7, 9, and 10

Resin pellet compositions were produced in the same manner as in (1) to (3) of Example 1, and microporous films were formed in the same manner as in (4), except that the production conditions and the formulation were changed as shown in Table 2. The evaluation results were all favorable. In addition, the first pellets removed from these resin pellet compositions were able to further contain 1 wt.% or more of the liquid component based on their weight.

Example 8

A first pellet raw material and a second pellet raw material were produced in the same manner as in (1) and (2) of Example 1. Subsequently, in (3) of Example 1, another resin raw material (C) was mixed in addition to the first pellet raw material and the second pellet raw material to produce a resin pellet composition. Thereafter, a microporous film was formed in the same manner as in (4). The evaluation results were all favorable. In addition, the first pellets removed from this resin pellet composition were able to further contain 1 wt.% or more of the liquid component based on their weight.

Example 11

The second pellets were removed from the resin pellet composition of Example 1 after a lapse of at least 30 minutes from the mixing of the first pellet raw material and the second pellet raw material. The thus removed second pellets alone were used as a resin pellet composition of Example 11. The evaluation results were all favorable.

Example 12

The first pellets were removed from the resin pellet composition of Example 1 after a lapse of at least 30 minutes from the mixing of the first pellet raw material and the second pellet raw material. The thus removed first pellets alone were used as a resin pellet composition of Example 12. The evaluation results were all favorable.

Comparative Example 1

An attempt was made to form a microporous film by the above-described method of (1) to (4) using only the second pellet raw material of Example 1 without mixing it with the first pellet raw material. The surface of the second pellet raw material was sticky with the liquid component and thus could not be transported through a pipe. In addition, the second pellet raw material adhered to the inside of a hopper and the like of the extruder and thus could not be supplied to the extruder at a constant rate, and this caused melt fracture and generation of unmelted gels, as a result of which a microporous film was not formed.

Comparative Example 2

A microporous film was formed by the above-described method of (1) to (4) using only the first pellet raw material of Example 1 without mixing it with the second pellet raw material. Both fluctuations in extrusion and unmelted gels were not acceptable, suggesting that the dispersion in the extruder was not very good. This is presumed to be caused by the effects of the porous parts contained in the first pellet raw material.

Comparative Example 3

An attempt was made to form a microporous film by the above-described method of (1) to (4) based on the formulation shown in Table 3. The surface of the second pellet raw material was sticky with the liquid component and thus could not be transported through a pipe. In addition, the second pellet raw material adhered to the inside of a hopper and the like of the extruder and thus could not be supplied to the extruder at a constant rate, and this caused melt fracture and generation of unmelted gels, as a result of which a microporous film was not formed.

Comparative Example 4

A microporous film was formed by the above-described method of (1) to (4) based on the formulation shown in Table 3. This microporous film had a large number of unmelted gels and was thus not acceptable.

Comparative Example 5

A microporous film was formed by the above-described method of (1) to (4) using a pellet-form high-density polyethylene (HDPE3) and polypropylene pellets (PP1). This microporous film had a large number of unmelted gels and was thus not acceptable.

Reference Example

A microporous film was formed by the above-described method of (1) to (4) using a powder-form high-density polyethylene (HDPE1) and polypropylene pellets (PP1). This microporous film is the same as the microporous film obtained in the method of producing the first pellet raw material of Example 1. Due to classification of the pellets and the powder, the configuration of the extruder used in this Example caused generation of unmelted gels in an extremely large number, and the microporous film was not acceptable as a product.

Table 1

| Material | Description |
|---|---|
| HDPE1 | High-density polyethylene, powder (particle size = 180 $\mu$m, Mw = 400,000) |
| HDPE2 | High-density polyethylene, powder (particle size = 200 $\mu$m, Mv = 1,000,000) |
| PP1 | Polypropylene, pellet (particle size = 4 mm, MFR = 0.4 (at 230°C, 2.16-kg load)) |
| LQ1 | Liquid paraffin (kinematic viscosity: 75.9 cSt, density: 868 kg/m$^3$ at 38°C) |
| HDPE3 | High-density polyethylene, pellet (particle size = 5 mm, Mv = 100,000) |

Table 2

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| (B) second pellet raw material | Resin component | Type | HDPE1 | HDPE1 | HDPE1 | HDPE1 | HDPE1 | HDPE1 | HDPE1 | HDPE1 | HDPE2 | HDPE1 |
| | | Content (% by weight) | 33 | 33 | 25 | 33 | 33 | 33 | 33 | 33 | 33 | 58 |
| | | Type | PP1 | PP1 | PP1 | PP1 | PP1 | PP1 | PP1 | PP1 | PP1 | PP1 |
| | | Content (% by weight) | 2 | 2 | 10 | 2 | 2 | 2 | 2 | 2 | 2 | 2 |
| | Liquid component | Type | LQ1 | LQ1 | LQ1 | LQ1 | LQ1 | LQ1 | LQ1 | LQ1 | LQ1 | LQ1 |
| | | Content (% by weight) | 65 | 65 | 65 | 65 | 65 | 65 | 65 | 65 | 65 | 40 |
| | Maximum length | mm | 5 | 3 | 5 | 5 | 5 | 5 | 5 | 5 | 5 | 5 |
| (A) first pellet raw material | Resin component | Type | HDPE1 | HDPE1 | HDPE1 | HDPE1 | HDPE1 | HDPE1 | HDPE1 | HDPE1 | HDPE2 | HDPE1 |
| | | Content (% by weight) | 90 | 90 | 90 | 90 | 90 | 90 | 90 | 90 | 90 | 90 |
| | | Type | PP1 | PP1 | PP1 | PP1 | PP1 | PP1 | PP1 | PP1 | PP1 | PP1 |
| | | Content (% by weight) | 10 | 10 | 10 | 10 | 10 | 10 | 10 | 10 | 10 | 10 |
| | Maximum length | mm | 6 | 12 | 8 | 3 | 6 | 6 | 6 | 6 | 6 | 6 |
| | Physical properties of raw material microporous film | Thickness (μm) | 6 | 6 | 6 | 6 | 6 | 6 | 6 | 6 | 6 | 6 |
| | | Porosity (%) | 44 | 44 | 44 | 44 | 44 | 44 | 44 | 44 | 44 | 44 |
| | | Air permeability (sec/100 ml) | 112 | 112 | 112 | 112 | 112 | 112 | 112 | 112 | 112 | 112 |
| | | Puncture strength (g) | 230 | 230 | 230 | 230 | 230 | 230 | 230 | 230 | 230 | 230 |

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| (C) other resin raw material | Type | none | none | none | none | none | none | none | HDPE1 | none | none |
| | Content (% by weight) | | | | | | | | 100 | | |
| | Type | | | | | | | | | | |
| | Content (% by weight) | | | | | | | | none | | |
| Raw material mixing ratio | (A) mixing ratio of first pellet raw material (% by weight) | 50 | 50 | 50 | 30 | 10 | 70 | 90 | 30 | 50 | 50 |
| | (B) mixing ratio of second pellet raw material (% by weight) | 50 | 50 | 50 | 70 | 90 | 30 | 10 | 30 | 50 | 50 |
| | (C) mixing ratio of other resin raw material (% by weight) | 0 | 0 | 0 | 0 | 0 | 0 | 0 | 40 | 0 | 0 |

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Resin pellet composition (R) | Total weight (% by weight) of first pellets | 52 | 52 | 52 | 32 | 13 | 71 | 91 | 31 | 52 | 52 |
| | Amount (% by weight) of liquid component contained in first pellets | 1.6 | 1.6 | 1.6 | 2.3 | 2.9 | 1.0 | 1.0 | 1.0 | 1.6 | 1.6 |
| | Amount (% by weight) of liquid component on outer surfaces of first pellets | 1.0 | 0.8 | 1.2 | 1.7 | 8.0 | 0.4 | 0.2 | 1.7 | 1.2 | 1.4 |
| | Amount (% by weight) of liquid component inside first pellets | 2.3 | 2.5 | 2.1 | 5.9 | 21.3 | 1.0 | 0.9 | 1.6 | 2.1 | 1.9 |
| | Angle of repose of first pellets | 40 | 38 | 41 | 44 | 45 | 36 | 33 | 35 | 43 | 44 |
| | Total weight (% by weight) of second pellets | 48 | 48 | 48 | 68 | 87 | 29 | 9 | 29 | 48 | 48 |
| | Amount (% by weight) of liquid component contained in second pellets | 30.9 | 30.9 | 30.9 | 43.2 | 55.6 | 18.5 | 5.5 | 18.5 | 30.9 | 18.4 |
| | Amount (% by weight) of liquid component on outer surfaces of second pellets | 0.6 | 1.0 | 1.2 | 0.9 | 0.9 | 0.7 | 2.0 | 1.0 | 1.4 | 1.0 |
| | Amount (% by weight) of liquid component inside second pellets | 61 | 61 | 61 | 61 | 61 | 61 | 53 | 61 | 60 | 36 |
| | Angle of repose of second pellets | 42 | 41 | 45 | 44 | 49 | 36 | 33 | 34 | 40 | 35 |

Table 3

| | | | Comp. Example 1 | Comp. Example 2 | Example 11 | Example 12 | Comp. Example 3 | Comp. Example 4 | Comp. Example 5 | Reference Example |
|---|---|---|---|---|---|---|---|---|---|---|
| (B) second pellet raw material | Resin component | Type | HDPE1 | none | HDPE1 | none | HDPE1 | none | none | none |
| | | Content (% by weight) | 33 | | 33 | | 33 | | | |
| | | Type | PP1 | | PP1 | | PP1 | | | |
| | | Content (% by weight) | 2 | | 2 | | 2 | | | |
| | Liquid component | Type | LQ1 | | LQ1 | | LQ1 | | | |
| | | Content (% by weight) | 65 | | 65 | | 70 | | | |
| | Maximum length | mm | 5 | | 5 | | 5 | | | |
| (A) first pellet raw material | Resin component | Type | none | HDPE1 | none | HDPE1 | none | HDPE1 | none | none |
| | | Content (% by weight) | | 95 | | 90 | | 90 | | |
| | | Type | | PP1 | | PP1 | | PP1 | | |
| | | Content (% by weight) | | 5 | | 10 | | 10 | | |
| | Maximum length | mm | | 6 | | 6 | | 6 | | |
| | Physical properties of raw material microporous film | Thickness ($\mu$m) | | 6 | | 6 | | 6 | | |
| | | Porosity (%) | | 44 | | 44 | | 44 | | |
| | | Air permeability (sec/100 ml) | | 112 | | 112 | | 112 | | |
| | | Puncture strength (g) | | 230 | | 230 | | 230 | | |

(continued)

| | | Comp. Example 1 | Comp. Example 2 | Example 11 | Example 12 | Comp. Example 3 | Comp. Example 4 | Comp. Example 5 | Reference Example |
|---|---|---|---|---|---|---|---|---|---|
| (C) other resin raw material | Type | none | none | none | none | none | none | HDPE3 | HDPE1 |
| | Content (% by weight) | | | | | | | 90 | 90 |
| | Type | | | | | | | PP1 | PP1 |
| | Content (% by weight) | | | | | | | 10 | 10 |
| Raw material mixing ratio | (A) mixing ratio of first pellet raw material (% by weight) | 0 | 100 | 0 | 100 | 0 | 0 | 0 | 0 |
| | (B) mixing ratio of second pellet raw material (% by weight) | 100 | 0 | 100 | 0 | 100 | 100 | 0 | 0 |
| | (C) mixing ratio of other resin raw material (% by weight) | 0 | 0 | 0 | 0 | 0 | 0 | 100 | 100 |

(continued)

| Resin pellet composition (R) | | Comp. Example 1 | Comp. Example 2 | Example 11 | Example 12 | Comp. Example 3 | Comp. Example 4 | Comp. Example 5 | Reference Example |
|---|---|---|---|---|---|---|---|---|---|
| | Total weight (% by weight) of first pellets | 0 | 100 | 0 | 100 | 0 | 100 | 0 | 0 |
| | Amount (% by weight) of liquid component contained in first pellets | 0 | 0 | 0 | 0 | 0 | 0 | 0 | 0 |
| | Amount (% by weight) of liquid component on outer surfaces of first pellets | 0 | 0 | 0 | 0.5 | 0 | 0 | 0 | 0 |
| | Amount (% by weight) of liquid component inside first pellets | 0 | 0 | 0 | 1.1 | 0 | 0 | 0 | 0 |
| | Angle of repose of first pellets | - | 35 | - | 40 | - | 34 | - | - |
| | Total weight (% by weight) of second pellets | 100 | 0 | 100 | 0 | 100 | 0 | 0 | 0 |
| | Amount (% by weight) of liquid component contained in second pellets | 65 | 0 | 65 | 0 | 70 | 0 | 0 | 0 |
| | Amount (% by weight) of liquid component on outer surfaces of second pellets | 15 | 0 | 2 | 0 | 12 | 0 | 0 | 0 |
| | Amount (% by weight) of liquid component inside second pellets | 50 | 0 | 63 | 0 | 58 | 0 | 0 | 0 |
| | Angle of repose of second pellets | 65 | - | 45 | - | 80 | - | - | - |

Table 4

| Physical properties and evaluation of microporous film produced using resin pellet composition (R) | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | Thickness ($\mu$m) | 6.1 | 6 | 6 | 6.2 | 5.9 | 5.8 | 6.1 | 6 | 6.2 | 6 |
| | Porosity (%) | 41 | 42 | 44 | 41 | 45 | 45 | 43 | 41 | 38 | 40 |
| | Air permeability (sec/100 ml) | 110 | 122 | 115 | 110 | 109 | 105 | 106 | 114 | 122 | 107 |
| | Puncture strength (gf) | 220 | 212 | 224 | 234 | 221 | 215 | 224 | 214 | 321 | 228 |
| | Basis weight (g/m$^2$) | 3.5 | 3.2 | 3.3 | 3.4 | 3.1 | 3 | 3.2 | 3.1 | 3.4 | 3.5 |
| | Basis weight-equivalent puncture strength (gf/(g/m$^2$)) | 63 | 66 | 68 | 69 | 71 | 72 | 70 | 69 | 94 | 65 |
| | Low classification property | A | A | A | A | A | A | A | A | A | A |
| | Unmelted gels | A | A | A | A | A | A | A | A | B | A |
| | Pipe transportability | A | A | A | A | A | A | A | A | A | A |
| | Fluctuations in extrusion | A | A | A | A | A | A | A | A | A | A |
| Use of recycled resin | | used | used | used | used | used | used | used | used | used | used |

Table 5

| Physical properties and evaluation of microporous film produced using resin pellet composition (R) | | Comp. Example 1 | Comp. Example 2 | Example 11 | Example 12 | Comp. Example 3 | Comp. Example 4 | Comp. Example 5 | Reference Example |
|---|---|---|---|---|---|---|---|---|---|
| | Thickness ($\mu$m) | Film was not formable | 6.1 | 6.1 | 6 | Not extrudable due to stickiness | 6 | 6.2 | 6.2 |
| | Porosity (%) | | 41 | 41 | 44 | | 42 | 40 | 41 |
| | Air permeability (sec/ 100 ml) | | 121 | 110 | 112 | | 109 | 112 | 120 |
| | Puncture strength (gf) | | 180 | 220 | 230 | | 228 | 95 | 231 |
| | Basis weight (g/m$^2$) | | 3.3 | 3.5 | 3.3 | | 3.4 | 3.5 | 3.5 |
| | Basis weight-equivalent puncture strength (gf/(g/m$^2$)) | | 55 | 63 | 70 | | 67 | 27 | 66 |
| | Low classification property | D: film was not formable | A | A | A | D: film was not formable | A | A | A |
| | Unmelted gels | D: film was not formable | D | A | B | D: film was not formable | D | D | B |
| | Pipe transportability | D: film was not formable | B | A | A | D: film was not formable | A | A | A |
| | Fluctuations in extrusion | D: film was not formable | D | A | A | D: film was not formable | B | B | A |
| Use of recycled resin | | used | used | used | used | used | used | not used | not used |

INDUSTRIAL APPLICABILITY

The resin pellet composition of the present disclosure can be used for molding a microporous film or the like. In addition, the resin pellet composition of the present disclosure can be mixed with a material to be mixed, such as other resin pellets, to obtain a mixed resin composition, and the thus obtained mixed resin composition can be used for molding a microporous film or the like.

REFERENCE SIGNS LIST

1:    component 1
2:    component 2
3:    embossing roller or compression roller
4:    cutter (provided inside)
5:    pellet container

**Claims**

1.   A resin pellet composition, comprising:

polyolefin-containing first pellets; and
0.1 wt.% to 99.0 wt.% of a liquid component,
wherein the first pellets have porous bodies, and the porous bodies are partially impregnated with some of the liquid component.

2.   The resin pellet composition according to claim 1, wherein the porous bodies of the first pellets each comprise a portion in the form of a microporous film; and/or a portion in the form of a bundle, knitted fabric, woven fabric, or nonwoven fabric formed of fibers or hollow fibers.

3.   The resin pellet composition according to claim 2, wherein the porous bodies of the first pellets each comprise the portion in the form of a microporous film, the portion comprising fibrils having a thickness of 50 $\mu$m or less and a diameter of 1 $\mu$m or less, and/or
the porous bodies of the first pellets each comprise the portion in the form of a bundle, knitted fabric, woven fabric, or nonwoven fabric formed of fibers or hollow fibers, the portion having a fiber diameter of 500 $\mu$m or less.

4.   The resin pellet composition according to any one of claims 1 to 3, wherein the amount of the liquid component contained in the first pellets is 0.1 wt.% to 50.0 wt.% based on a total weight of the resin pellet composition.

5.   The resin pellet composition according to any one of claims 1 to 4, wherein the liquid component is a plasticizer,

the viscosity-average molecular weight of the polyolefin contained in the first pellets, or the viscosity-average molecular weight of resins constituting the first pellets as a whole is 200,000 or more, and
the first pellets are in the form of being folded, separable, or laminated.

6.    The resin pellet composition according to any one of claims 1 to 5, wherein the first pellets are able to further comprise, in addition to the liquid component, 5 wt.% or more of the liquid component.

7.   The resin pellet composition according to any one of claims 1 to 6, wherein the weight of the liquid component existing on the outer surfaces of the first pellets is 20 wt.% or less with respect to a total weight of the first pellets, and is measured by the following method:
the first pellets are collected in an amount of 20 g; the thus collected 20 g of the first pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, the weight of the first pellets is measured, and the difference in the weight before and after the wiping operation is determined as the amount of the liquid component existing on the outer surfaces of the first pellets.

8. The resin pellet composition according to any one of claims 1 to 7, wherein the weight of the liquid component existing inside the first pellets is 0 wt.% to 70 wt.% with respect to a total weight of the first pellets, and is measured by the following method:
the first pellets are collected in an amount of 20 g; the thus collected 20 g of the first pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, when the liquid component is removed from the first pellets by extraction with a solvent, the difference in the weight before and after the extraction is determined as the weight of the liquid component existing inside the first pellets.

9. A resin pellet composition, comprising polyolefin-containing second pellets,

wherein the second pellets have non-porous bodies each comprising a part formed of a resin comprising the polyolefin, and a part formed of a liquid component, and
the weight of the liquid component existing on the outer surfaces of the second pellets is 10 wt.% or less with respect to a total weight of the second pellets, and is measured by the following method:
the second pellets are collected in an amount of 20 g; the thus collected 20 g of the second pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, the weight of the second pellets is measured, and the difference in the weight before and after the wiping operation is determined as the amount of the liquid component existing on the outer surfaces of the second pellets.

10. The resin pellet composition according to claim 9, wherein the second pellets have an angle of repose of less than 60°.

11. The resin pellet composition according to claim 9 or 10, wherein the weight of the liquid component existing inside the second pellets is 30 wt.% or more with respect to a total weight of the second pellets, and is measured by the following method:
the second pellets are collected in an amount of 20 g; the thus collected 20 g of the second pellets is wrapped with a 1-m square sheet having a thickness of 0.6 mm, in which plural 6 $\mu$m-thick polyethylene microporous films having a porosity of 38%, a puncture strength of 280 gf, and a pore size of 0.06 $\mu$m are stacked, to wipe off the liquid component existing on the outer surfaces of the pellets; when the liquid component is transferred to the sheet, the part thereof changes in color to translucent; this wiping operation is repeated multiple times while replacing the sheet until a change in the color of the sheet is no longer observable; and, thereafter, when the liquid component is removed from the first pellets by extraction with a solvent, the difference in the weight before and after the extraction is determined as the weight of the liquid component existing inside the first pellets.

12. The resin pellet composition according to any one of claims 1 to 8, further comprising polyolefin-containing second pellets,
wherein the second pellets have non-porous bodies each comprising a part formed of a resin comprising the polyolefin, and a part formed of the liquid component.

13. The resin pellet composition according to claim 12, wherein a weight ratio of the first pellets and the second pellets (first pellets/second pellets) is 10/90 to 90/10.

14. The resin pellet composition according to claim 12 or 13, having a porosity of higher than 10% but 90% or lower after extraction of the liquid component from the first pellets.

15. The resin pellet composition according to any one of claims 12 to 14, wherein the first pellets and/or the second pellets comprise a polyethylene having a viscosity-average molecular weight of 200,000 or more.

16. The resin pellet composition according to any one of claims 12 to 15, wherein the first pellets and/or the second pellets comprise a recycled resin.

17. The resin pellet composition according to any one of claims 12 to 16, wherein the amount of the liquid component contained in the second pellets is 20 wt.% to 90 wt.% based on a total weight of the resin pellet composition.

18. The resin pellet composition according to any one of claims 12 to 17, wherein the first pellets and/or the second pellets have an angle of repose of less than 60°.

19. A method of producing a polyolefin microporous film, the method comprising:

extruding and stretching the resin pellet composition according to any one of claims 1 to 18; and
extracting the liquid component with a solvent to form pores.

20. A method of producing the resin pellet composition according to any one of claims 12 to 18, the method comprising:

anextrusion step of extruding a composition, which comprises a polyolefin-containing resin and a liquid component, using an extruder to form a microporous original film; and
an extraction step of extracting the liquid component from the microporous original film in the presence of an extraction solvent,
wherein the method further comprises obtaining a second pellet raw material from the microporous original film after the extrusion step but before the extraction step, obtaining a first pellet raw material from the microporous original film after the extraction step, and mixing the first pellet raw material and the second pellet raw material.

21. A method of producing the resin pellet composition according to any one of claims 12 to 18, the method comprising:

a step of producing the first pellet raw material, the step comprising the first extrusion step of extruding a composition, which comprises a polyolefin-containing resin and a liquid component, using an extruder to form a microporous original film, the extraction step of extracting the liquid component from the microporous original film obtained in the first extrusion step in the presence of an extraction solvent, and obtaining a first pellet raw material from the microporous original film after the extraction step;
a step of producing the second pellet raw material, the step comprising the second extrusion step of extruding a composition, which comprises a polyolefin-containing resin and a liquid component, using an extruder to form a microporous original film, and obtaining a second pellet raw material from the microporous original film obtained in the second extrusion step; and
the step of mixing the first pellet raw material and the second pellet raw material.

# FIG. 1

(a)　　　　　　　(b)　　　　　　　(c)

(d)

# FIG. 2

(a)　　　　　　　(b)

# FIG. 3

PELLETIZATION

(a)

(b)

# FIG. 4

(a)

(b)

(c)

## INTERNATIONAL SEARCH REPORT

| International application No. |
|---|
| **PCT/JP2022/016263** |

**A. CLASSIFICATION OF SUBJECT MATTER**

*C08J 9/40*(2006.01)i; *B29B 9/02*(2006.01)i; *C08J 3/12*(2006.01)i; *C08J 9/28*(2006.01)i
FI:  C08J9/40 CES; B29B9/02; C08J3/12 Z; C08J9/28

According to International Patent Classification (IPC) or to both national classification and IPC

**B. FIELDS SEARCHED**

Minimum documentation searched (classification system followed by classification symbols)

C08J9/00-9/42; B29B7/00-11/14; C08J3/00-3/28; 99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-142002 A (ASAHI KASEI CORP.) 29 August 2019 (2019-08-29)<br>claims 1-2, 4, 7-9, paragraphs [0010], [0012], [0015]-[0027], [0032]-[0037], [0042]-[0044], [0049]-[0050], [0053], [0056], [0064]-[0067], fig. 1-3 | 1-21 |
| A | CN 100999597 A (BEIJING CHEMICAL ENGINEERING UNIV.) 18 July 2007 (2007-07-18)<br>entire text, all drawings | 1-21 |
| A | JP 2020-92068 A (ASAHI KASEI CORP.) 11 June 2020 (2020-06-11)<br>entire text, all drawings | 1-21 |
| A | JP 2021-14643 A (TORAY IND., INC.) 12 February 2021 (2021-02-12)<br>entire text, all drawings | 1-21 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/016263**

| Patent document cited in search report | | | Publication date (day/month/year) | Patent family member(s) | Publication date (day/month/year) |
|---|---|---|---|---|---|
| JP | 2019-142002 | A | 29 August 2019 | (Family: none) | |
| CN | 100999597 | A | 18 July 2007 | (Family: none) | |
| JP | 2020-92068 | A | 11 June 2020 | (Family: none) | |
| JP | 2021-14643 | A | 12 February 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10101854 A
- JP 2006021519 A
- JP 2019142002 A
- JP 2007023171 A
- WO 2005103127 A
- WO 200638532 A
- JP H615721 B
- JP 4623780 B